# EUROPEAN PATENT APPLICATION

(11) **EP 4 759 468 A1**
(43) Date of publication of application: **17.06.2026**
(21) Application number: 25221939.9
(22) Date of filing: 09.12.2025
(51) Int. Cl.: B23K 13/01, B23K 13/06, B23K 20/00, B23K 20/16

(54) **METHOD OF JOINING STRUCTURAL ELEMENTS**

(30) Priority: 10.12.2024 US 202463730003 P; 23.12.2024 US 202463737847 P
(71) Applicant: Cheng, Paul Po, London ON N6A 3S9 (CA)
(72) Inventor: Cheng, Paul Po, London ON N6A 3S9 (CA)
(74) Representative: Murgitroyd & Company

(57) **Abstract**

The disclosure is directed at a method and system for joining structural elements.

## Description

### CROSS-REFERENCE TO OTHER APPLICATIONS

The disclosure claims priority from US Provisional Applications No. 63/730,003 and 63/737,847 filed December 10, 2024 and December 23, 2024, respectively, which are both hereby incorporated by reference.

### FIELD

The disclosure is generally directed at metallurgy and, more specifically, at a method for joining structural elements.

### BACKGROUND

In the prior art, structural elements, e.g., steel pipe, may be welded together using conventional welding methods. However, conventional welding methods have some disadvantages. Conventional methods tend to be somewhat time-consuming, and there is a worldwide shortage of qualified welders. Also, with conventional welding methods, the quality of the welds tends to vary.

Conventional methods often result in the welded product having a zone therein that includes metal that was melted and then cooled. In this zone, the metal that was melted and then cooled may have different characteristics from the surrounding body of material, which may be undesirable.

Therefore, there is provided a novel method of joining structural elements.

### SUMMARY

For the foregoing reasons, there is a need for a method of joining structural elements together that overcomes or mitigates one or more of the defects or deficiencies of the prior art.

In its broad aspect, the disclosure provides a method of joining structural elements with one or more couplers. Each coupler includes a body and a number of fins positioned on the body. The method includes heating heated parts of the coupler and the structural elements, in an inert (non-oxidizing) atmosphere, to a hot working temperature at which the heated parts are plastically deformable. Once the heated parts are at the hot working temperature, they are engaged, and subjected to an engagement motion in which one or more of the coupler and the structural elements are moved relative to the others, to subject at least portions of the heated parts to shearing , for plastic deformation thereof. A zone of recrystallized material is formed due to the plastic deformation which joins the coupler and the structural elements.

In another aspect of the disclosure, there is provided a method including providing a pair of structural elements, each of the structural elements including end portions, the end portions of each of the pair of structural elements positioned opposed to each other; providing at least one coupler, each of the at least one coupler including a body portion, wherein the body portion is positioned proximate the end portions of each of the pair of structural elements; providing an inert atmosphere covering the coupler and the end portions of each of the pair of structural elements; heating a coupler heated section of the at least one coupler to a coupler hot working temperature and heating structural element heated sections of the end portions to a structural element hot working temperature; subjecting one or both of the at least one coupler and at least a selected one of the pair structural elements to a translocation motion, to engage the at least one coupler with an interior or exterior surface of the end portions of each of the pair of structural elements; subjecting one or more of the at least one coupler and at least one of the pair of structural elements to an engagement motion, in which one or more of the coupler and said at least one of the pair of structural elements move relative to the other; and urging the at least one coupler against the interior or exterior surface of each of the pair of structural elements at the end portions thereof, to join the at least one coupler to the end portions of the respective structural elements.

In another aspect, providing a coupler further includes providing a plurality of fins positioned on the body portion of each of the at least one coupler for at least partial engagement with the interior surface of the end portions of each of the pair of structural elements. In yet another aspect, providing a coupler further includes providing a plurality of fins positioned on the body portion of each of the at least one coupler for at least partial engagement with the exterior surface of the end portions of each of the pair of structural elements. In yet a further aspect, heating a coupler heated section of the coupler to a coupler hot working temperature and heating structural element heated sections of the end portions to a structural element hot working temperature includes providing at least one heating element proximate the at least one coupler and the end portions of the pair of structural elements; energizing the at least one heating element to heat the coupler heated section and the structural element heated sections; and removing the at least one heating element.

In a further aspect, the end portions of each of the pair of structural elements includes a bevelled surface thereby forming a cavity when the end portions are engaged whereby the coupler heated section extrudes into the cavity during application of the translocation and/or the engagement motion. In yet another aspect, providing at least one coupler comprises providing at least two couplers. In yet a further aspect, the method includes inserting an intermediate element between the at least two couplers to seal a gap between the at least two couplers. In an aspect, urging the at least one coupler against the interior or exterior surface of each of the pair of structural elements at the end portions thereof, to join the at least one coupler to the end portions of the respective structural elements includes urging the at least one coupler against both the interior and the exterior surfaces of each of the pair of structural elements at the end portions thereof, to join the at least one coupler to the end portions of the respective structural elements

Accordingly there is provided a method as detailed in claim 1. Advantageous features are in the dependent claims.

### BRIEF DESCRIPTION OF THE DRAWINGS

The disclosure will be better understood with reference to the attached drawings, in which:
Fig. 1 is a longitudinal cross-section of two structural elements located to position respective end portions thereof opposed to each other, and an embodiment of a coupler positioned proximal to the end portions;
Fig. 2A is a longitudinal section of the structural elements of Fig. 1, joined by the coupler of Fig. 1;
Fig. 2B is a longitudinal section of the structural elements of Figs. 1 and 2A, joined by the coupler to form a product;
Fig. 2C is a longitudinal section of the product formed by joining structural elements with bevelled surfaces thereon together with the coupler of Fig. 1;
Fig. 3 is a side view of two structural elements and another embodiment of a coupler positioned on the structural elements;
Fig. 4 is a longitudinal section of the coupler and the structural elements of Fig. 3;
Fig. 5 is a longitudinal section of the coupler assembly and the structural elements of Figs. 3 and 4 taken along line A-A' in Fig. 3, showing the coupler assembly joining the structural elements;
Fig. 6 is a side view of two structural elements with a number of couplers positioned thereon, drawn at a larger scale;
Fig. 7 is a side view of an alternative embodiment of the coupler of the disclosure positioned to join a base and a structural element together, drawn at a smaller scale;
Fig. 8 is a side view of couplers joining two offset structural elements together;
Fig. 9A is a side view of couplers and an intermediate element joining structural elements together, drawn at a larger scale;
Fig. 9B is a cross-section of the couplers of Fig. 9A positioned for joining the structural elements at Fig 9A with the intermediate element positioned for location therebetween, drawn at a larger scale;
Fig. 9C is a cross-section of the couplers of Figs. 9A and 9B with the intermediate element positioned therebetween;
Fig. 10 is a longitudinal section of another alternative embodiment of the coupler of the disclosure, engaged with exterior and interior and end surfaces of respective structural elements;
Fig. 11 is a longitudinal section of another alternative embodiment of the coupler of the disclosure, engaged with exterior and interior and end surfaces of respective structural elements;
Fig. 12 is a longitudinal section of another alternative embodiment of the coupler of the disclosure, engaged with interior and end surfaces of respective structural elements;
Fig. 13 is a longitudinal section of the coupler of Fig. 12 in which the coupler is joined with end portions of the respective structural elements;
Fig. 14A is a cross-section of alternative embodiments of the coupler of the disclosure, positioned for engagement with exterior and interior surfaces of structural elements, drawn at a larger scale;
Fig. 14B is a cross-section of a product produced when the couplers of Fig. 14A are secured to the structural elements thereof;
Fig. 15A is a cross-section of alternative embodiments of the coupler of the disclosure, positioned for engagement with exterior and interior surfaces of structural elements;
Fig. 15B is a cross-section of a product produced when the couplers of Fig. 15A are secured to the structural elements thereof;
Fig. 16A is a cross-section of another alternative embodiment of a coupler of the disclosure positioned for engagement in a cavity in a structural element;
Fig. 16B is a cross-section showing the coupler of Fig. 16A secured in the cavity in the structural element;
Fig. 17A is a cross-section of another alternative embodiment of the coupler of the disclosure positioned for engagement in a cavity in a structural element;
Fig. 17B is a cross-section showing the coupler of Fig. 17A secured in the cavity in the structural element;
Fig. 18A is a side view of a structural body and another alternative embodiment of the coupler of the disclosure with one or more heating elements positioned therebetween, drawn at a smaller scale;
Fig. 18B is a top view of the structural body and the coupler of Fig. 18A;
Fig. 18C is a side view of the coupler and the structural body of Figs. 18A and 18B with the coupler secured to the structural body;
Fig. 19A is a cross-section of a portion of a structure having upper and lower plates and a number of I-beams positioned therebetween in which couplers are positioned for being joined to the I-beams to the upper and lower plates, drawn at a larger scale;
Fig. 19B is a cross-section of a portion of the structure of Fig. 19A in which an I-beam is joined to the lower plate by two couplers, drawn at a larger scale;
Fig. 20 is a cross-section of the portion of the structure of Fig. 19A in which I-beams are joined to the lower and upper plates by couplers, drawn at a smaller scale;
Fig. 21 is a longitudinal section through a portion of the structure of Fig. 20;
Fig. 22A is a cross-section of a portion of a structure having curved upper and lower plates and a number of I-beams positioned therebetween in which couplers are positioned for being joined to the upper and lower plates;
Fig. 22B is a cross-section of a portion of the structure of Fig. 22A in which an I-beam is joined to the lower plate by two couplers, dream at a larger scale;
Fig. 23 is a cross-section of the portion of the structure of Fig. 22A in which I-beams are joined to the lower and upper plates by couplers, drawn at a smaller scale;
Fig. 24 is a longitudinal section through a portion of the structure of Fig. 23; and
Fig. 25 is a longitudinal section of a portion of a structure in which the upper and lower plates are curved in a longitudinal direction and in which an I-beam is joined to the upper and lower plates by couplers.

### DETAILED DESCRIPTION

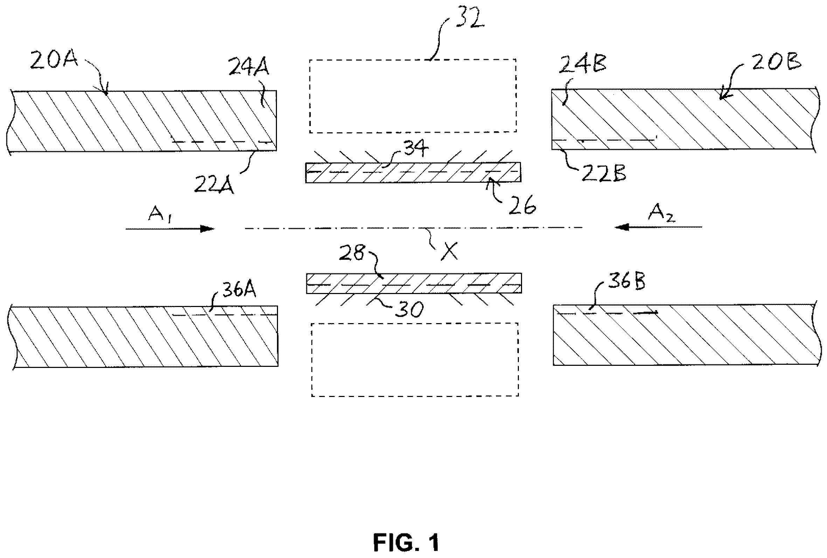

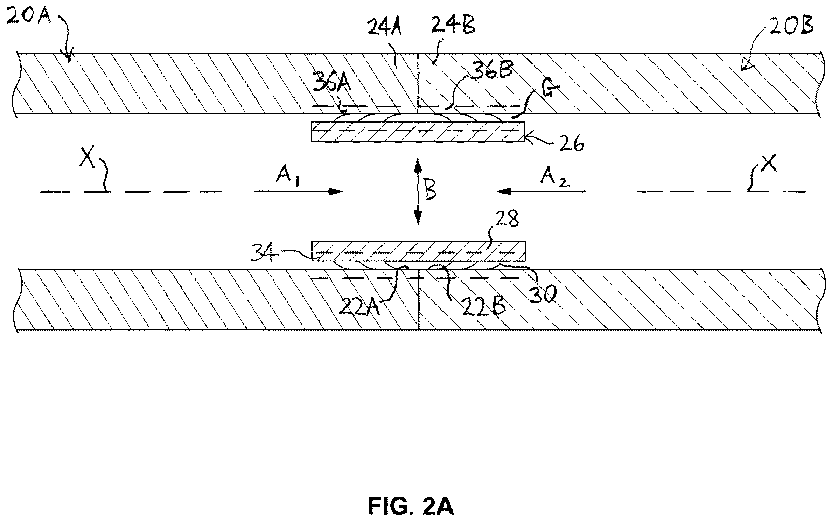

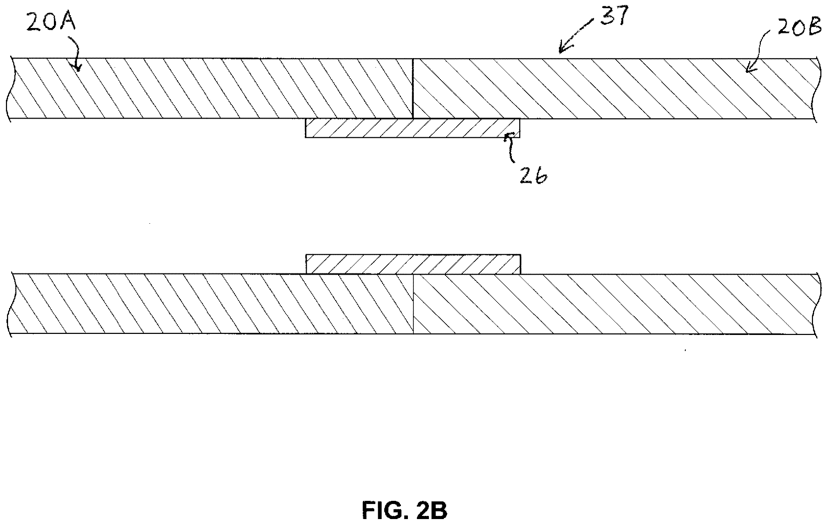

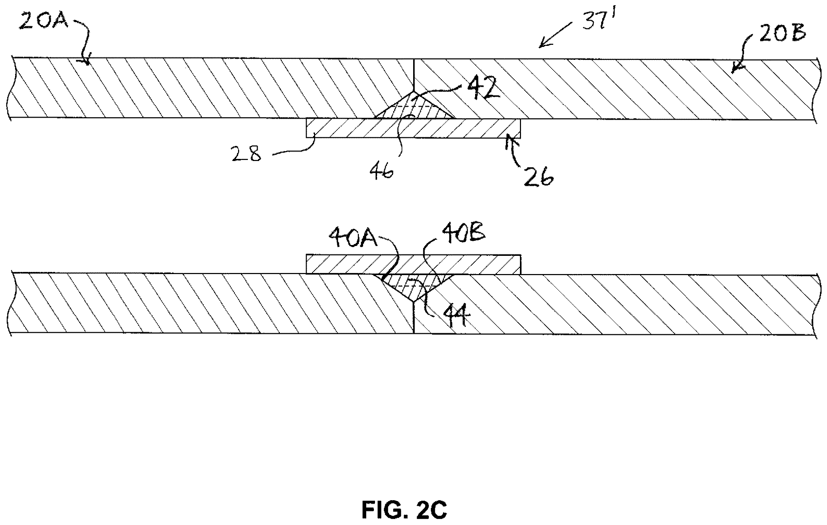

In the attached drawings, like reference numerals designate corresponding elements throughout. Reference is first made to Figs. 1 and 2 to describe an embodiment of a method in accordance with the disclosure.

In one embodiment, the method includes providing two structural elements 20A, 20B with respective interior surfaces 22A, 22B thereof. As can be seen in Fig. 1, each of the structural elements 20A, 20B includes an end portion thereof. For clarity of illustration, the end portions are identified by reference characters 24A, 24B (Figs. 1-2B). As can be seen in Fig. 1, the structural elements 20A, 20B are positioned such that the end portions 24A, 24B are opposed to each other.

It will be understood that the structural elements are made of one or more metals, e.g., steel. For the purposes hereof, "metal" is understood to refer to a metallic element, or to an alloy that includes more than one metallic element.

As illustrated in Figs. 1-2B, in the current embodiment, the structural elements 20A, 20B may be metal pipes with a circular cross-section, defining an axis "X". However, those skilled in the art would appreciate that the structural elements may have any cross-section that may be required for structural purposes. Also, those skilled in the art would appreciate that, if required for structural or other purposes, the cross-section of the structural element may vary over its length.

Joining of the structural elements 20A, 20B includes a coupler 26. The coupler 26 includes a body 28, and a number, or set, of fins 30 positioned on the body 28 for at least partial engagement with the interior surfaces 22A, 22B of the structural elements 20A, 20B. The coupler 26 may be made of one or more suitable metals, which may or may not be the same as the metal of the structural elements that are to be joined by the coupler 26. One example of a suitable material includes, but is not limited to, a metal that has a different or lower hot working temperature than the metal of the structural elements.

After the coupler 26 and structural elements 20A, 20B are positioned, one or more heating elements 32 are provided, for heating a portion or section of the coupler 26 (which may be seen as a first heated part or a coupler heated section 34) to a coupler hot working temperature, and for heating respective portions or sections of the end portions 24A, 24B (which may be seen as second heated parts or structural element heated sections 36A, 36B of the end portions 24A, 24B) of the respective structural elements 20A, 20B to a structural element hot working temperature (Fig. 1). It will be understood that the fins 30 are included in the first heated part 34.

**In** one embodiment, the first and second heated parts 34, 36A, 36B may be heated to different hot working temperatures, e.g., a first hot working temperature and a second hot working temperature. For example, the coupler 26 may be made of a first metal that is plastically deformable at a first hot working temperature, and the structural elements 20A, 20B may be made of a second metal that is plastically deformable at a second hot working temperature. To simplify the description, only one hot working temperature is referred to hereinafter although it would be understood that the hot working temperature for the coupler and the hot working temperature for the structural elements may be the same or different.

In Fig. 1, the thicknesses of the first heated part 34 and the second heated parts 36A, 36B are exaggerated, for clarity of illustration.

The heating elements may heat the heated parts using any suitable method of heating. In one embodiment, the heating elements heat the heated parts by induction. Those skilled in the art would appreciate that, depending on the circumstances, the most energy-efficient arrangement may be to have a separate heating element 32 positioned and configured for heating each of the first and second heated parts 34, 36A, 36B. However, it will be understood that only one heating element 32 is shown in Fig.1, for clarity of illustration.

In some embodiments, during heating, an inert atmosphere is provided to cover the coupler 26 and at least the end portions 24A, 24B of the respective structural elements 20A, 20B. Those skilled in the art would be aware of gases that may form a suitable inert (non-oxidizing) atmosphere. It will be understood that a suitable container for containing the inert atmosphere is omitted from the drawings, for clarity of illustration..

Next, the one or more heating elements 32 are energized, to heat the first heated part 34 and the second heated parts 36A, 36B to their respective hot working temperature. While the first heated part 34 and the second heated parts 36A, 36B are at their respective hot working temperature, one or both of the coupler 26 and at least a selected one of the structural elements 20A, 20B are subjected to a translocation motion, to engage the coupler 26 with the interior surfaces 22A, 22B of the end portions of the respective structural elements 20A, 20B. More precisely, the first heated part 34 is engaged with each of the second heated parts 36A, 36B as schematically shown in Fig. 2B.

In the example illustrated in Figs. 1-2B, a translation motion applied to the structural elements 20A, 20B causes the structural elements 20A, 20B to move in the directions indicated by arrows "A₁", "A₂" respectively, and the coupler 26 is held stationary while the structural elements 20A, 20B are moved linearly with respect to the coupler 26. As will be described, other arrangements or sequences for the translocation motion are contemplated. Those skilled in the art would appreciate that movement of the coupler and/or the structural elements, in order to engage the first and second heated parts, may occur in any suitable sequence, depending on the circumstances.

In addition, while the first heated part 34 and the second heated parts 36A, 36B are at their respective hot working temperature, one or more of the coupler 26 and the selected one of the structural elements 20A, 20B are subjected to an engagement motion, in which one or more of the coupler 26 and the selected one of the structural elements 20A, 20B move relative to the other. For example, in Fig. 2A, the coupler 26 is subjected to an engagement motion in which the coupler 26 is moved, relative to the structural elements 20A, 20B, in the direction indicated by arrow "B". The engagement motion may be any relative motion, and it may be repeated at regular intervals. For example, the coupler 26 may be rotated or oscillated about the axis "X".

The coupler 26 may also be urged against the interior surfaces 22A, 22B of the end portions 24A, 24B, to join the coupler 26 to the end portions 24A, 24B of the respective structural elements 20A, 20B. For example, the coupler 26 may be urged outwardly, against the interior surfaces 22A, 22B (Fig. 2A). It will be understood that the means for urging the coupler 26 against the structural elements 20A, 20B is omitted from Figs. 1-2B for clarity of illustration. Those skilled in the art would be aware of suitable means for urging the coupler 26 against the structural elements 20A, 20B.

It will also be understood that only a small number of the fins 30 are shown in Figs. 1 and 2A, and the lengths of the fins 30 are exaggerated, for clarity of illustration. Also, for clarity of illustration, a gap "G" that is shown between the body 28 and the interior surfaces 22A, 22B is exaggerated in Fig. 2A, for clarity of illustration. Preferably, the fins 30 are plastically deformed, while at their hot working temperature, when they are squeezed between the interior surfaces 22A, 22B and the body 28 (Fig. 2A).

In Fig. 2B, the structural elements 20A, 20B are shown joined together by the coupler 26 to form a product 37. In the product, the fins 30 have been squeezed and plastically deformed between the coupler body 28 and the interior surfaces 22A, 22B of the end portions 24A, 24B.

As noted above, only one heating element 32 is shown in Figs. 1 and 2A, for clarity of illustration, however, the configuration and positioning of the at least one heating elements 32 may be determined by practical considerations, e.g., any difficulties encountered in positioning the heating element(s) inside the structural elements, and also in removing the heating element(s) from their respective positions or locations once the first and second heated parts are at the respective hot working temperature.

When the heated parts are at their hot working temperature, they are subject to plastic deformation. As the hot working temperature is less than the melting temperature of the metal of the coupler 26 and the structural elements 20A, 20B, when the structural elements 20A, 20B and the coupler 26 are joined together using the method of the disclosure, in contrast to conventional welding methods, the method of the disclosure does not involve first melting metal, and then allowing the metal to solidify.

When the heated parts are at their hot working temperature and engaged, then due to the engagement motion, the heated parts 34, 36A, 36B are at least partially subjected to shear, to form a zone or area with a relatively uniformly fine-grained microstructure that includes at least portions of the heated parts, and in which the interior surfaces 22A, 22B are at least partially subsumed. **It** is believed that the relatively fine-grained microstructure results from such shearing, while the heated parts are at their hot working temperature.

It will also be understood that, in one embodiment, the engagement motion of one or both of the structural elements and/or the coupler may commence before the translocation motion commences.

As can be seen in Fig. 1, in one embodiment, the end portions 24A, 24B include respective end surfaces 25A, 25B. In one embodiment, the end portions 24A, 24B may initially be positioned to be butting or abutting against each other, so that the end surfaces 25A, 25B are engaged with each other, prior to heating. In this embodiment, the heating element 32 may be positioned, for example, between the coupler and the interior surfaces of the structural elements 20A, 20B. In this embodiment, once the first and second heated parts are at their hot working temperature, the heating element is moved away so that it does not interfere with engagement of the coupler with the interior surfaces 22A, 22B. Coupler 26 is subjected to a translocation motion to move it against the interior surfaces 22A, 22B, and the first and second structural elements 20A, 20B are urged against each other. While the coupler 26 is urged against the interior surfaces 22A, 22B and the structural elements 20A, 20B are urged against each other, one or both of the coupler and the end portions 24A, 24B are moved relative to each other, in response to the engagement motion.

Once the coupler 26 and the end portions 24A. 24B are engaged, the temperature of the first and second heated parts rapidly decreases from their hot working temperature. When the temperature of the metal coupler or the temperature of the end portions is less than the hot working temperature, plastic deformation is not possible. This is because once the coupler and the end portions are joined or bonded together, further engagement motion is resisted. Accordingly, once sufficient resistance to the engagement motion is encountered, the engagement motion ceases.

The metal in the first and second heated parts 34, 36A, 36B is at least partially subjected to shearing when the metal is plastically deformed, when the engagement motion is underway, and the coupler is urged against the interior surfaces 22A, 22B of the end portions 24A, 24B. Due to recrystallization because of the plastic deformation at the hot working temperature, the coupler 26 is metallically bonded to the end portions 24A, 24B. As noted above, the recrystallized metal joining the coupler and the end portions 24A, 24B is relatively uniformly fine-grained. After shearing and cooling, the recrystallized zone of metal extends (i) between the first heated part 34 and second heated part 36A, and (ii) between the first heated part 34 and the second heated part 36B, to unify the affected parts, metallurgically bonding them together. The interior surfaces 22A, 22B that are engaged with the fins 30, and at least parts of the fins 30 that were engaged with the interior surfaces 22A, 22B when they were first at the hot working temperature are subsumed in the recrystallized metal. It will be understood that, in Fig. 2A, the body 28 of the coupler 26 is shown with the fins 30 mounted thereon and spaced apart from the interior surfaces 22A, 22B for clarity of illustration.

The recrystallization of at least portions of the heated parts is due to the shearing to which such portions are subjected. As noted above, the shearing can take place when the heated parts are heated to a selected hot working temperature (or a selected range of hot working temperatures), at which the heated parts of the coupler and the end portions are plastically deformable.

The fins that are mounted to the coupler body 28 facilitate the process of joining the coupler 26 to a structural element 20A, 20B in two ways. First, because the fins are generally much thinner than the coupler body, the fins are heated to the hot working temperature more quickly than the coupler body. Second, due to their smaller size, the fins may be plastically deformed to fill openings that are defined between the coupler body and either structural element or both structural elements, when the coupler is engaged with the structural element(s). In general, a large number of relatively small fins is preferred. It will be understood that for the purposes hereof, a "fin" may be seen as any projection above a surface adjacent to such projection, e.g., the fins may be elongate filaments extending from the surface of the coupler body, small bumps or associated with small corrugations, or the material remaining after a number of holes have been made in the material.

In circumstances where the structural elements 20A, 20B may not be intended to carry fluid therein or therethrough, the coupler's position on the interior surfaces does not adversely affect any fluid flow, so the coupler 26 may have any suitable configuration. Also, in this context, the connection of the coupler with the end portions may not be required to be fluid-tight.

When the coupler 26 is urged against the interior surfaces 22A, 22B, some of the plastically deformable material may be extruded from the region between the body 28 and the interior surfaces 22A, 22B. For instance, parts of the fins may be so extruded. Accordingly, in one embodiment, one or both of the end portions 24A, 24B may include a bevelled surface that partially defines a cavity in which the plastically deformable and extruded material is received.

As can be seen in Fig. 2C, in one embodiment, the structural elements 20A, 20B include respective bevelled surfaces 40A, 40B. It will be understood that, in Fig. 2C, the structural elements 20A, 20B and the coupler 26 are shown after they have been joined together, to form the product identified by reference character 37'.

The bevelled surfaces 40A, 40B partially define a cavity 42 in which extruded material 44 is receivable (Fig. 2C). As can be seen in Fig. 2C, once the product 37' has been formed, the cavity 42 is also partially defined by an internal surface 46 of the body 28 of the coupler 26. It will be understood that the fins 30 are omitted from Fig. 2C for clarity of illustration.

It is believed that, when the respective heated parts 34, 36A, and 34, 36B are engaged, and the plastically deformable material therein is sheared, then at least a portion of the heated parts 34, 36A, 36B (including the fins) is squeezed or extruded into the cavity 42.

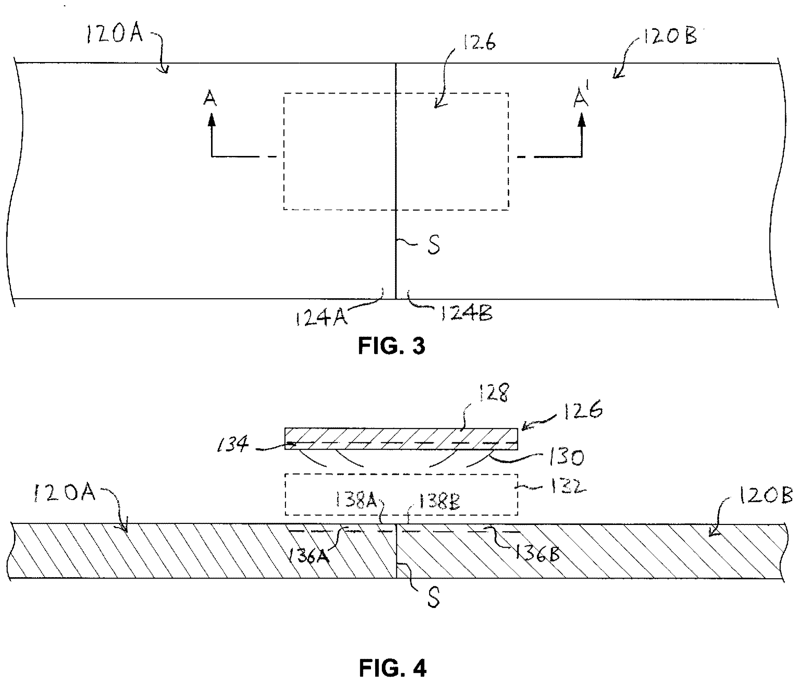

In an alternative embodiment, the coupler may be attached to exterior surfaces of the structural elements. In one embodiment, the method of the disclosure includes, first, providing two structural elements 120A, 120B with respective exterior surfaces 138A, 138B thereof, as can be seen in Figs. 3 and 4. Each of the structural elements 120A, 120B includes an end portion thereof.

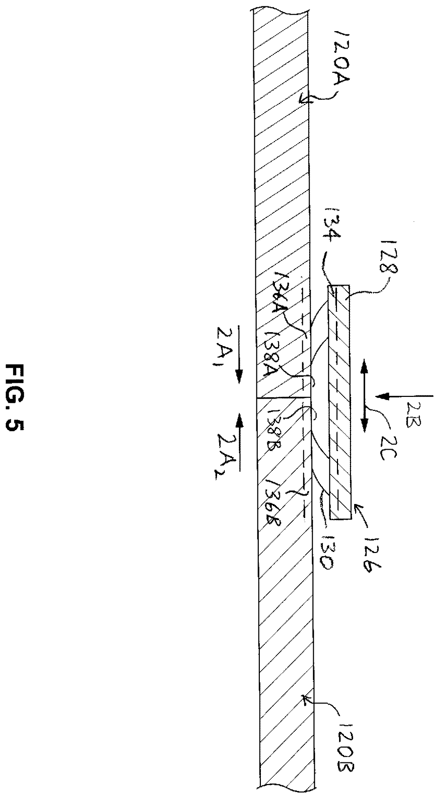

As can be seen in Fig. 3, which is a side view of a pair of structural elements, the structural elements 120A, 120B abut each other, to define a seam "S" therebetween. In Fig. 4, the coupler 126 is shown in position to have a first heated part 134 heated by heating element 132, and the coupler 126 is shown in Fig. 5 with its fins 130 engaged with the structural elements 120A, 120B. Fig. 5 is a longitudinal section taken along line A-A' in Fig. 3.

In this current embodiment, the coupler 126 includes a body 128 and a number of fins 130 positioned on the body 128 for at least partial engagement with the exterior surfaces 138A, 138B of the structural elements 120A, 120B (Fig. 4).

For clarity of illustration, the end portions are identified in Figs. 3-5 by reference characters 124A, 124B. The structural elements 120A, 120B are positioned such that the end portions 124A, 124B are engaged with each other. In one embodiment, as illustrated in Figs. 3 and 4, the structural elements 120A, 120B are positioned so that the end portions 124A, 124B are engaged and aligned with each other.

It will be understood that the structural elements 120A, 120B may not be fully shown in Figs. 4 and 5. The structural elements 120A, 120B may have any suitable cross-section, e.g., they may be metal pipes, and round in cross-section.

One or more heating elements 132 are provided for heating a first heated part 134 of the coupler 126 to a hot working temperature and for heating respective second heated parts 136A, 136B of the end portions 124A, 124B of the respective structural elements 120A, 120B to their hot working temperature (Fig. 3). The at least one heating elements 132 are configured and positioned for heating the first and second heated parts 134, 136A, 136B in any suitable manner, such as by induction heating although other methods of heating the heated parts are contemplated .

In the drawings, the extent or size of the first and second heated parts 134, 136A, 136B are exaggerated, for clarity of illustration. In general, the heated parts are generally thinner than shown in the Figs..

In one embodiment, only one heating element 132 may be required as schematically shown in Fig. 4. Those skilled in the art would appreciate that more than one heating element may be used, e.g., three may be required, one for each of the respective heated parts 134, 136A, 136B.

An inert atmosphere is provided to cover the coupler 126 and at least the end portions 124A, 124B of the respective structural elements. The inert atmosphere is preferably contained within a container (not shown). It will be understood that, for clarity of illustration, the container of the inert atmosphere is omitted from Figs. 3 and 4.

Next, the one or more heating elements 132 are energized, to heat the first and second heated parts 134, 136A, 136B to their hot working temperature.

While the first and second heated parts 134, 136A, and 136B are at their hot working temperature, the coupler 126 is subjected to a translocation motion (i.e., in the direction indicated by arrow "2B" in Fig. 5), to engage the coupler 126 with the exterior surfaces 138A, 138B of the respective end portions of the respective structural elements. The end portions 124A, 124B are also urged against each other, i.e., in the directions indicated by arrows "2A₁" and "2A₂" in Fig. 5.

Depending on the circumstances or scenario, the positioning of the coupler 126 on the structural elements 120A, 120B may not need to be precise.

While the first and second heated parts are at their hot working temperature, one or more of the coupler 126 and one or both of the structural elements 120A, 120B are subjected to an engagement motion, in which one or more of the coupler and the one or more structural elements move relative to the other. For example, one or more of the coupler 126 and the structural elements 120A, 120B may be rotated or oscillated about an axis (not shown) of the structural elements 120A, 120B, or the coupler may be moved parallel to the axis (i.e., in the direction indicated by arrow "2C" in Fig. 5).

In circumstances where the structural elements 120A, 120B are not easily moved, only the coupler 126 is subjected to the engagement motion.

While the coupler is urged against the exterior surfaces of the end portions, and while the first and second heated parts are at their hot working temperature, the first heated part 134 and the second heated parts 136A, 136B are subjected to shear and plastic deformation. Due to the shearing of the first and second heated parts in response to at least one of the translation or engagement motion, a unitary metallurgically bonded zone including a fine-grained microstructure extending through the first and second heated parts is formed, in which the original end surfaces of end portions, and the fins (and/or the surface of the coupler in contact with the exterior surfaces), are at least partially subsumed in the new zone of fine-grained microstructure, to join the coupler to the exterior surfaces of the end portions of the respective structural elements.

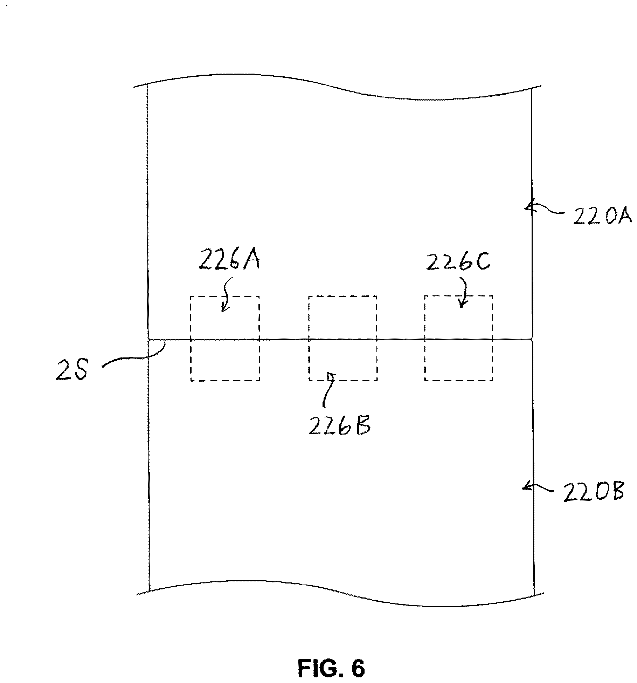

In another embodiment, as illustrated in Fig. 6, more than one coupler may be positioned on the exterior surface of the structural elements and radially spaced apart from each other, to provide a relatively strong bond between two adjacent structural elements 220A, 220B. For example, the structural elements 220A, 220B may be portions of a tower (not fully shown), e.g., a tower built to support a wind turbine. In Fig. 6, the structural elements 220A, 220B are engaged with each other to define a seam "2S" therebetween.

As illustrated in Fig. 6, the structural elements 220A, 220B may be connected by the more than one coupler, identified in Fig. 6 by reference characters 226A, 226B, and 226C. It will be understood that the couplers may be secured to the structural elements 220A, 220B using the techniques described above. It will be understood that the heating elements are omitted from Fig. 6 for clarity of illustration.

It will be understood that only the respective bodies of the couplers 226A, 226B, 226C are illustrated in Fig. 6, and the fins of the couplers 226A, 226B, 226C are omitted from Fig. 6. In the embodiment illustrated in Fig. 6, the couplers 226A, 226B, 226C are secured to the respective exterior surfaces 238A, 238B of the structural elements 220A, 220B, and respectively span the seam "2S".

Those skilled in the art would appreciate that, alternatively, or in addition, other couplers may be secured to the respective interior surfaces (not shown in Fig. 6) of the structural elements 220A, 220B.

In some embodiments, the couplers 226A, 226B, 226C may be spaced apart from each other (as shown in Fig. 6) when the connection between the structural elements 220A, 220B does not need to be fluid-tight.

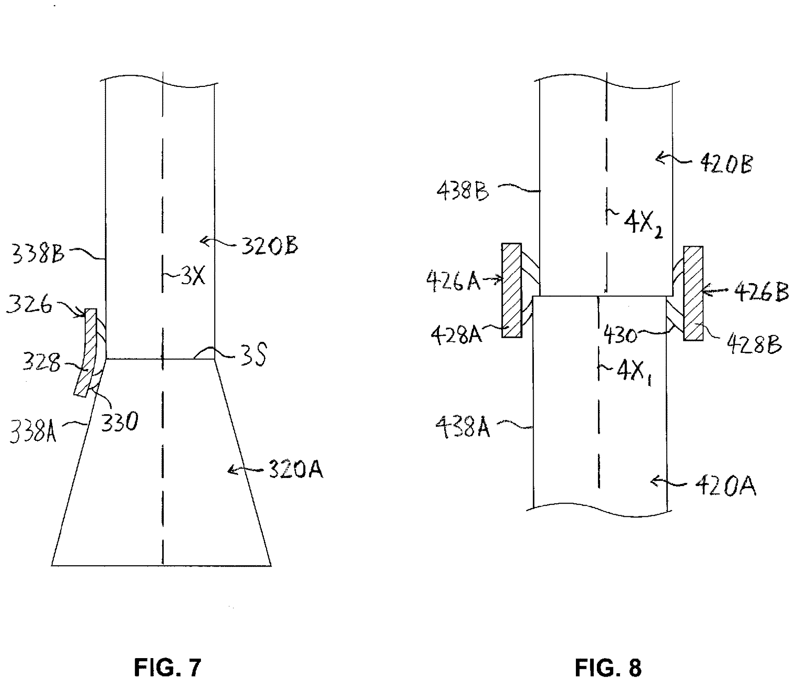

As can be seen in Figs. 7 and 8, further embodiments of couplers that may be used to connect workpieces or structural elements with exterior surfaces that are not aligned are shown. For example, in Fig. 7, a structural element 320A has an exterior surface 338A that is positioned to define an acute angle relative to a common axis "3X". Another structural element 320B has an exterior surface 338B that is aligned with the axis "3X". In Fig. 7, the structural elements 320A, 320B are engaged with each other to define a seam "3S" therebetween. As can be seen in Fig. 7, the coupler 326 is formed to fit over both of the two nonaligned exterior surfaces. The coupler 326 may be secured to the structural elements 320A, 320B utilizing the techniques described above. Heating elements are omitted for clarity of illustration.

It will be understood that the fins 330 may be sized and positioned so as to fill such gaps as there are between the body 328 and the structural elements 320A, 320B when the coupler 326 is engaged with the structural elements.

From the foregoing, it can be seen that a number of couplers may be utilized, i.e., positioned to span across the seam "3S" in order to join the structural elements 320A, 320B. It will be understood that only one coupler is illustrated in Fig. 7 to simplify the illustration.

In Fig. 8, exterior surfaces 438A, 438B of structural elements 420A. 420B, although parallel to the axes "4X₁" and "4X₂" respectively, are offset from each other, because the axes are not aligned. In Fig. 8, the structural elements 420A, 420B are engaged with each other to define a seam "4S" therebetween. The couplers 426A, 426B are radially spaced apart from each other and positioned to connect the structural elements 420A, 420B. It will be understood that the couplers may be connected with the structural elements 420A, 420B utilizing the techniques described above. Heating elements are omitted for clarity of illustration.

It will be understood that the fins 430 may be sized and positioned so as to fill such gaps as there are between the bodies 428A, 428B and exterior surfaces 438A, 438B of the structural elements 420A, 420B once the couplers are engaged with the structural elements.

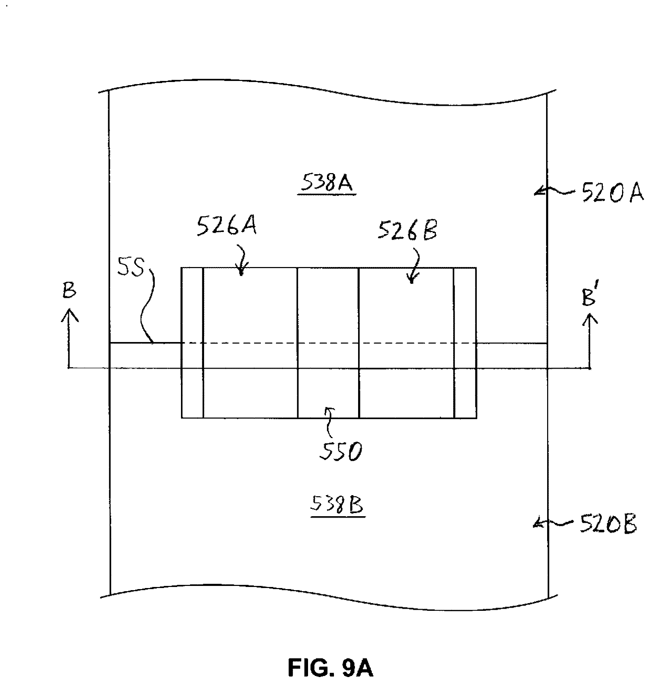

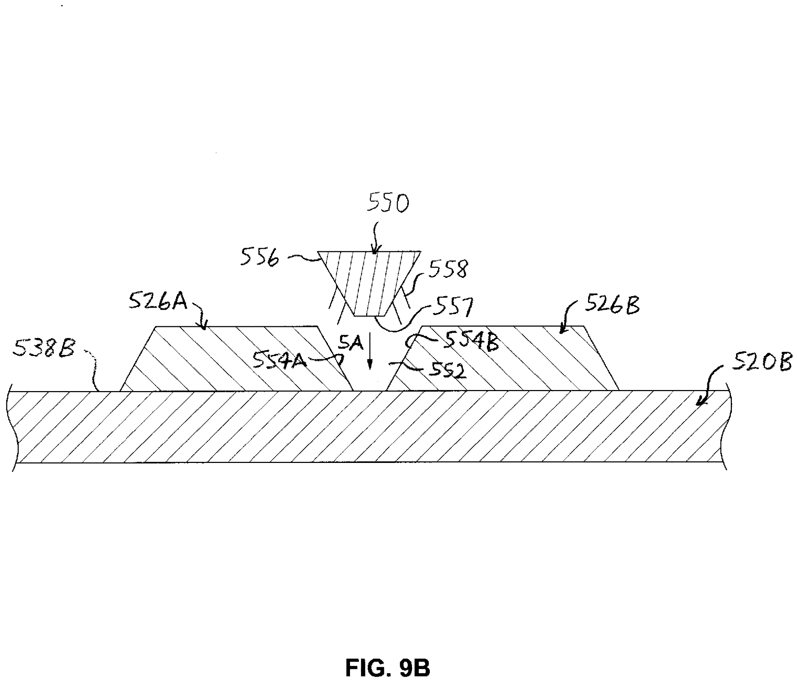

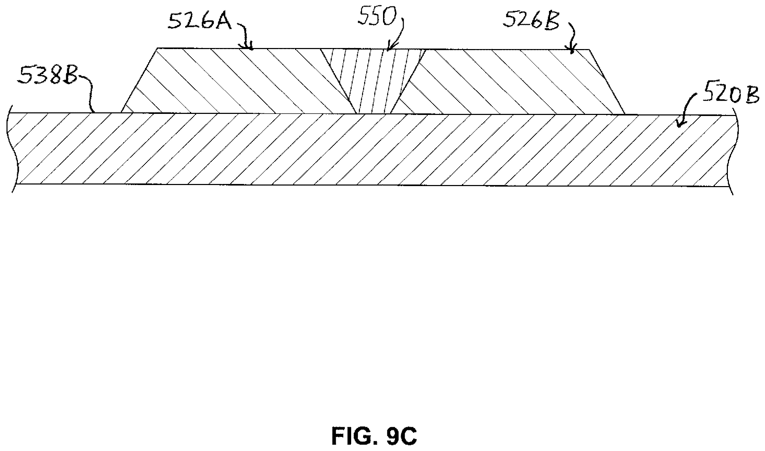

Another alternative embodiment of the method or system of the disclosure is illustrated in Figs. 9A-9C. As can be seen in Fig. 9A, structural elements 520A, 520B are engaged with each other to define a seam "5S" therebetween. Couplers 526A, 526B are joined on exterior surfaces 538A, 538B of the structural elements, across the seam "5S". The couplers are secured to the exterior surfaces of the structural elements as described above. However, in Fig. 9A, an intermediate element 550 is also shown positioned between the couplers 526A, 526B. The manner in which the intermediate element 550 is joined to the structural elements 520A, 520B is illustrated in Fig. 9B and 9C, and described in more detail below.

In Figs. 9A-9C, the intermediate element 550 is utilized to seal a gap 552 that is defined between couplers 526A, 526B. In some embodiments, it may be desirable to seal the gap 552 (Fig. 9B), for example, if it is intended to provide a fluid-tight seal along the seam "5S".

Fig. 9C is a cross-section taken along line B-B' in Fig. 9A. In this situation, faces 554A, 554B of the respective couplers 526A, 526B may be prepared for engaging with the intermediate element 550, e.g., so that the intermediate element 550 fits in the gap 552 (Fig. 9B).

As can be seen in Fig. 9B, the intermediate element 550 includes one or more intermediate surfaces 556 from which a number of fins 558 project where the intermediate surfaces 556 are formed to mate with the faces 554A, 554B, with the fins 558 pressed therebetween. As can be seen in Figs. 9B and 9C, the intermediate element 550 includes a surface 557 that, when the intermediate element 550 is positioned in the gap 552, engages the exterior surfaces 538A, 538B.

Each of the couplers, the intermediate element and the structural elements include sections that are heated to facilitate the engagement between the components. As with the embodiments above, the heated parts are covered by an inert atmosphere (not shown). It will be understood that one or more heating elements (not shown in Fig. 9B) are positioned to heat first heated parts (not shown) of the respective couplers 526A, 526B to a hot working temperature. It will be understood that the heated parts are positioned in the respective faces 554A, 554B. The couplers may also include heated parts within surfaces that are engaged with the structural elements.

One or more heating elements (not shown in Fig. 9B) are positioned to heat one or more heated parts (not shown) of the immediate element 550 to the hot working temperature of the intermediate element. It will be understood that the fins 558 are included in the heated parts of the intermediate element 550.

Bonding between the couplers, the intermediate element and the exterior surfaces may be performed as generally described above. While the heated parts of the couplers and the intermediate element are at their hot working temperature, the intermediate element 550 is moved in the direction indicated by arrow "5A", to engage the fins 558 with the faces 554A, 554B (Fig. 9B). Once engaged, the intermediate element 550 continues to be urged in the direction indicated by arrow "5A", until the heated parts are at least partially bonded together. Also, while the intermediate element 550 is urged against the faces 554A, 554B, and while the heated parts of the intermediate element and the couplers are at their respective hot working temperature, the intermediate element is oscillated in the gap 552, causing plastic deformation of at least portions of the heated parts of the couplers and the intermediate element that are in engagement.

As can be seen in Figs. 9A and 9C, the intermediate element 550 is also positioned between the couplers 526A, 526B to engage the exterior surfaces 538A, 538B or both sides of the seam "5S".

As described above, due to the plastic deformation, the faces 554A, 554B, the intermediate surface 556, and the surface 557 are subsumed in recrystallized material with a relatively fine-grained microstructure, and zones of the recrystallized material that span the intermediate element and the couplers 526A, 526B join the intermediate element 550 and the couplers 526A, 526B together, joined in a metallurgical bond.

Those skilled in the art would appreciate that the embodiment of the method that is illustrated in Figs. 9A - 9C may be utilized, e.g., where it is sought to provide a fluid-tight seal along the length of the seam "5S". While only two couplers and one intermediate element are shown in Figs. 9A to 9C, in other embodiments, there may be more couplers with intermediate elements therebetween.

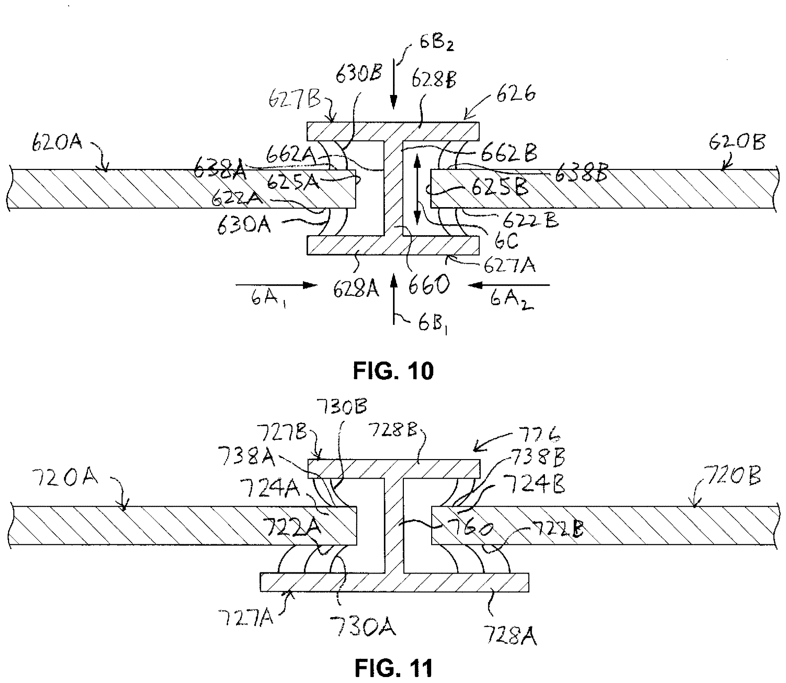

In another alternative embodiment, a coupler 626 includes interior and exterior assemblies or bodies 627A, 627B that are connected by a central portion 660 (Fig. 10). As will be described, the interior assembly 627A includes an interior body 628A, and the exterior assembly 627B includes an exterior body 628B. The structural elements 620A, 620B include respective end surfaces 625A, 625B, at the ends of respective end portions 624A, 624B of the structural elements 620A, 620B. The structural elements 620A, 620B are initially spaced apart from each other.

The coupler 626 is initially positioned so that the central portion 660 is located between the end portions 624A, 624B or end surfaces. The central portion 660 includes internal surfaces 662A, 662B that are facing the end surfaces 625A, 625B respectively.

In the current embodiment, the interior assembly 627A includes fins 630A extending from the body 628A, and the exterior assembly 627B includes fins 630B extending from the body 628B. The fins 630B are positioned for engagement with exterior surfaces 638A, 638B of the end portions 624A, 624B, and the fins 630A are positioned for engagement with the interior surfaces 622A, 622B of the end portions 624A, 624B.

In the example illustrated in Fig. 10, the structural elements 620A, 620B are shown as flat plates, and the exterior surfaces 638A, 638B and the interior surfaces 622A, 622B thereof are parallel. Those skilled in the art would appreciate that the coupler 626 may be utilized to join structural elements that are not generally flat, but instead are curved. For curved structural elements, the bodies 628A and 628B may be shaped accordingly.

It will be understood that heating elements (not shown) are provided to heat a section or portion, seen as a first heated part, of the interior assembly 627A, a section or portion, seen as a second heated part, of the exterior assembly 627B, and a section of portion, seen as a third heated part, of the central portion 660 to a hot working temperature. The structural elements also include areas which are heated (seen as heated parts) to their hot working temperature. It will also be understood that the heating elements are omitted from Fig. 10, and the heated parts are not identified, for clarity of illustration.

As illustrated in Fig. 10, the gaps between the interior body 628A and the interior surfaces 622A, 622B and between the exterior body 628B and the exterior surfaces 638A, 638B are exaggerated, for clarity of illustration.

While the respective heated parts are at their hot working temperature, the first and second structural elements 620A, 620B are moved toward each other, in the directions indicated by arrows "6A₁" and "6A₂", causing the end surfaces 625A, 625B to engage the internal surfaces 662A, 662B of the central portion 660 respectively. Shortly thereafter, the interior and exterior assemblies 627A, 627B are urged inwardly, i.e., in the directions indicated by arrows "6B₁" and "6B₂". Once the fins 630A, 630B are engaged with the interior and exterior surfaces 622A, 622B, 638A, 638B, and while the interior and exterior assemblies 627A, 627B are urged in the directions indicated by arrows "6B₁" and "6B₂", one or more of the coupler 626 and the structural elements 620A, 620B are moved relative to each other (such as via an engagement motion), so that the heated parts are at least partly plastically deformed. The plastic deformation causes shearing of the engaged material, resulting in the coupler 626 being metallurgically bonded with the end portions 624A, 624B, as described above.

One or more of the structural elements 620A, 620B, the interior and exterior bodies 628A, 628B, and the central portion 660 may include one or more bevelled surfaces. The bevelled surfaces are formed so as to define one or more cavities, once the coupler 626 is joined with the structural elements 620A, 620B, into which at least parts of the plastically deformable material may be extruded.

In another alternative embodiment, as schematically illustrated in Fig. 11, the coupler 726 includes interior and exterior assemblies 727A, 727B that have different lengths. The coupler 726 may be used, for example, where the exterior of the completed system (not shown) is to have minimal obstructions, i.e., the exterior is to be somewhat streamlined, but the interior of the completed system may have substantial obstructions. The coupler 726 may be used, for example, where the structural elements 720A, 720B form an exterior shell of a vehicle. In these circumstances, it is desirable that the exterior assembly 727B includes a body 728B that is of minimal or a shorter length, and the interior assembly 727A may include a body 728A that is of any suitable length. The interior and exterior assemblies are connected by a central portion 760.

As can be seen in Fig. 11, the assemblies 727A, 727B also include fins 730A, 730B mounted to the respective bodies 728A, 728B thereof.

The exterior surfaces of the structural elements 720A, 720B are identified by reference characters 738A, 738B respectively. The interior surfaces of the structural elements 720A, 720B are identified by reference characters 722A, 722B respectively.

Heated parts (not shown) of the interior and exterior assemblies, the central portion, and end portions 724A, 724B of the structural elements are heated to their hot working temperature by one or more heating elements (not shown), in an inert atmosphere. The heated parts include at least parts of the fins 730A, 730B.

It will be understood that the heating element(s) and the heated parts are omitted from Fig. 11 for clarity of illustration. It will also be understood that the gaps between the bodies and the interior surfaces 722A, 722B and the exterior surfaces 738A, 738B are exaggerated, and the lengths of the fins 730A, 730B are also exaggerated, for clarity of illustration.

While the heated parts are at their respective hot working temperature, the coupler 726 is engaged with the end portions 724A, 724B. In the same or a similar manner as described above, the coupler and the end portions are urged together (such as via a translocation motion), and also moved in an engagement motion relative to each other, while engaged. As noted above, a zone of material having a relatively fine-grained microstructure is created.

It will be understood that one or more of the structural elements 720A, 720B, interior and exterior bodies 728A, 728B, and the central portion 760 may include one or more bevelled surfaces. The bevelled surfaces are formed so as to define one or more cavities, once the coupler 726 is joined with the structural elements 720A, 720B, into which at least parts of the plastically deformable material may be extruded.

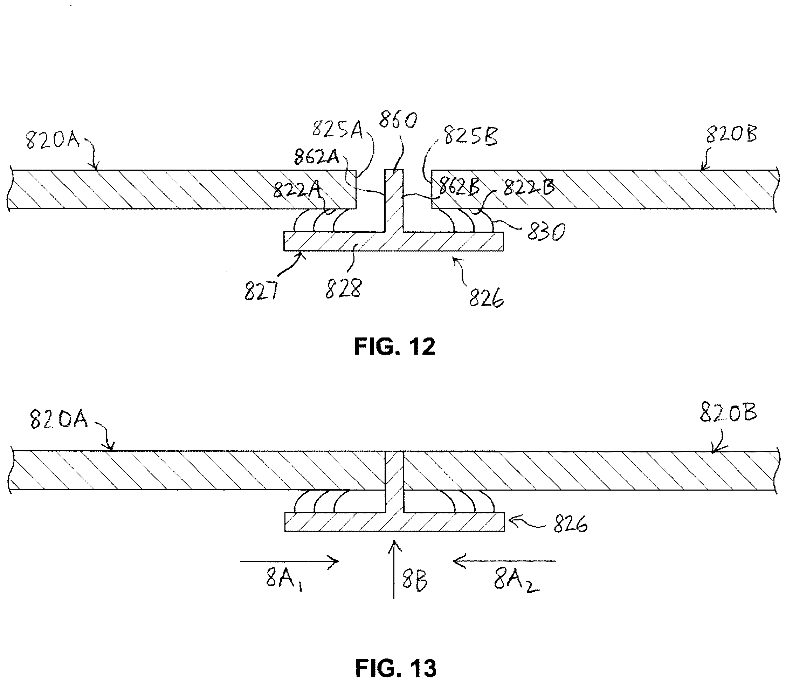

In another alternative embodiment, illustrated in Figs. 12 and 13, a coupler 826 includes an interior assembly 827 and a central portion 860. As can be seen in Fig. 12, two structural elements 820A, 820B are initially spaced apart to define a gap between end surfaces 825A, 825B at the end portions 824A, 824B. The interior assembly 827 includes an interior body 828 and a number or set of fins 830 extending from the body toward interior surfaces 822A, 822B of the end portions 824A, 824B.

As can be seen in Fig. 12, the central portion 860 includes internal surfaces 862A, 862B that face the end surfaces 825A, 825B respectively.

Heating elements (not shown) are provided, to heat sections of the end portions 824A, 824B (seen as heated parts of the end portions 824A, 824B), (ii) a section of the of the interior assembly 827 (seen as a heated part of the interior assembly 827), and (iii) a section of the central portion (seen as a heated part of the central portion 860) to their hot working temperature.

While the heated parts are at their respective hot working temperature, one or both of the structural elements 820A, 820B are moved in the directions indicated by arrows "8A₁" and "8A₂" (translocation motion) respectively in Fig. 13, to engage the end surfaces 825A, 825B with the internal surfaces 862A, 862B of the central portion 860. Also, the coupler 826 is simultaneously urged (engagement motion) in the direction indicated by arrow "8B", to urge the fins 830 against the interior surfaces 822A, 822B.

While the heated parts are at their respective hot working temperature and the coupler 826 is engaged with the structural elements 820A, 820B as described above, one or more of the coupler 826 and the structural elements 820A, 820B are moved relative to the other, subjecting at least part of the heated parts to shear, for plastic deformation thereof. As described above, the result is that the structural elements and the coupler are metallurgically bonded together.

In some embodiments, one or more of the structural elements 820A, 820B, the body 828, and the central portion 860 may include one or more bevelled surfaces. The bevelled surfaces are formed so as to define one or more cavities, once the coupler 826 is joined with the structural elements 820A, 820B, into which at least parts of the plastically deformable material may be extruded.

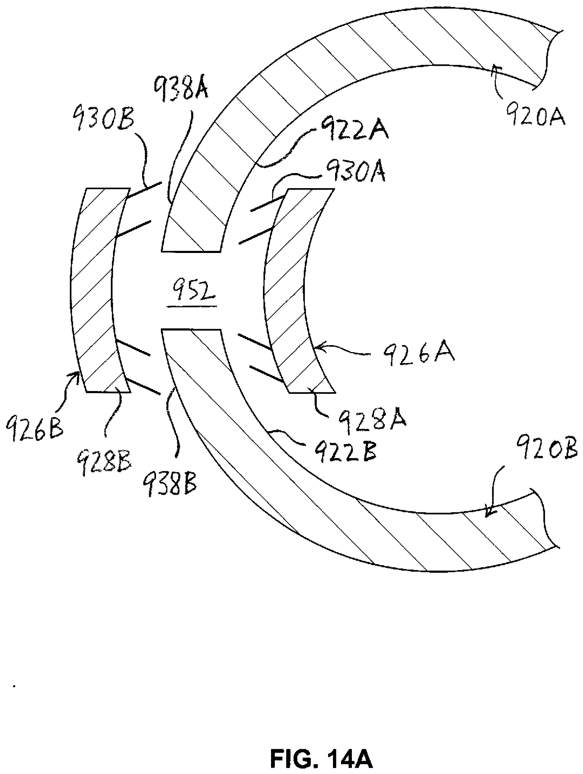

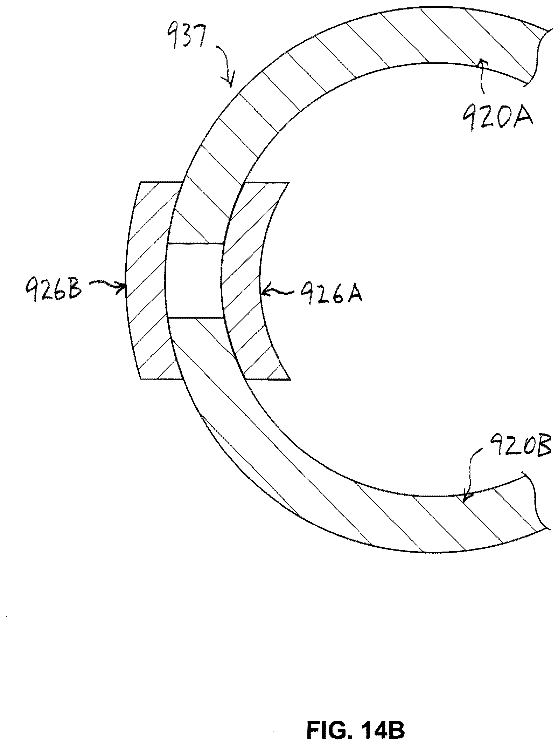

In another alternative embodiment, as illustrated in Figs. 14A and 14B, interior and exterior couplers 926A, 926B may be used to join structural elements 920A, 920B. As will be described, one or both of the couplers 926A, 926B may be used. As can be seen in Figs. 14A and 14B, the structural elements 920A, 920B are positioned to define a gap 952 therebetween, however, alternatively, the structural elements 920A, 920B may be engaged with each other, to close the gap 952.

As can be seen in Fig. 14A, in one embodiment, each of the couplers 926A, 926B includes a number of fins 930A, 930B. The length of the fins as illustrated in Fig. 14A has been exaggerated for clarity of illustration.

The structural elements 920A, 920B are formed to define generally arcuate shapes, and the interior coupler 926A, includes a body 928A that is shaped to fit against the respective interior surfaces 922A, 922B of the structural elements 920A, 920B. Similarly, the exterior coupler 926B includes a body 928B that is shaped to fit against respective exterior surfaces 938A, 938B of the structural elements 920A, 920B. In the current embodiment, each of the bodies 928A, 928B has a surface 946A, 946B that is shaped to fit against the structural elements 920A, 920B relatively tightly. In some embodiments, each of the surfaces 946A, 946B is formed to accommodate the fins that are squeezed between the respective bodies 928A, 928B and the relevant surfaces of the structural elements 920A, 920B after sections of the couplers and the structural elements are heated to their respective hot working temperature and subjected to at least one fo the translation and engagement motion.

In one embodiment, one or more heating elements (not shown) are positioned between the coupler 926A and the interior surfaces 922A, 922B. Similarly, one or more heating elements (not shown) are positioned between the coupler 926B and the exterior surfaces 938A, 938B. The couplers and at least parts of the interior and exterior surfaces 922A, 922B, 938A, 938B are preferably covered by an inert atmosphere. It will be understood that the heating elements and a container for containing the inert atmosphere in position are omitted from Figs. 14A and 14B for clarity of illustration.

The heating elements are then energized, to heat sections or heated parts of the couplers 926A, 926B in the inert atmosphere to a hot working temperature. In one embodiment, the heating is by induction. Preferably, the heated parts of the couplers include at least parts of the fins 930A, 930B respectively.

It will be understood that the heated parts of the structural elements 920A, 920B that are adjacent to the interior surfaces 922A, 922B, and the heated parts of the structural elements 920A, 920B that are adjacent to the exterior surfaces 938A, 938B are also omitted for clarity of illustration.

While the heated parts 934A, 936A, and 936B are at their respective hot working temperature, the coupler 926A is engaged with the internal surfaces 922A, 922B of the structural elements 920A, 920B. In generally the same manner as described above, upon engagement, and while the heated parts 934A, 936A, and 936B are at their respective hot working temperature, the coupler 926A is subjected to an engagement motion, resulting in plastic deformation of at least some of the material in the heated parts, the heated part 934A being at least partially metallurgically bonded with the heated parts 936A, 936B. As described above, the engagement motion may be any motion of one or both of the coupler and the structural element relative to the other. A zone of recrystallized metal having a relatively fine-grained microstructure is created across at least portions of the heated parts. The surfaces 946A, 922A, and 922B are at least partially subsumed in the recrystallized zone.

Similarly, while the heated parts 934B, 935A, and 935B are at their respective hot working temperature, the coupler 926B is engaged with the exterior surfaces 938A, 938B. In generally the same manner as described above, upon engagement, and while the heated parts 934B, 935A, and 935B are at the hot working temperature, the coupler 926B preferably is subjected to an engagement motion, resulting in plastic deformation of at least some of the material in the heated parts, and the heated part 934B being at least partially metallurgically bonded with the heated parts 935A, 935B. As noted above, a zone of metal having a relatively fine-grained microstructure is created. The surfaces 946B, 938A, and 938B are at least partially subsumed in the recrystallized zone.

As illustrated in Fig. 14B, once the couplers 926A, 926B are joined with the structural elements 920A, 920B, a product 937 is formed. It will be understood that the fins 930A, 930B are omitted from Fig. 14B for clarity of illustration.

In some embodiments, one or more of the structural elements 920A, 920B and the coupler bodies 928A, 928B, include one or more bevelled surfaces. The bevelled surfaces are formed so as to define one or more cavities, once the couplers 926A, 926B are joined with the structural elements 920A, 920B, into which at least parts of the plastically deformable material may be extruded.

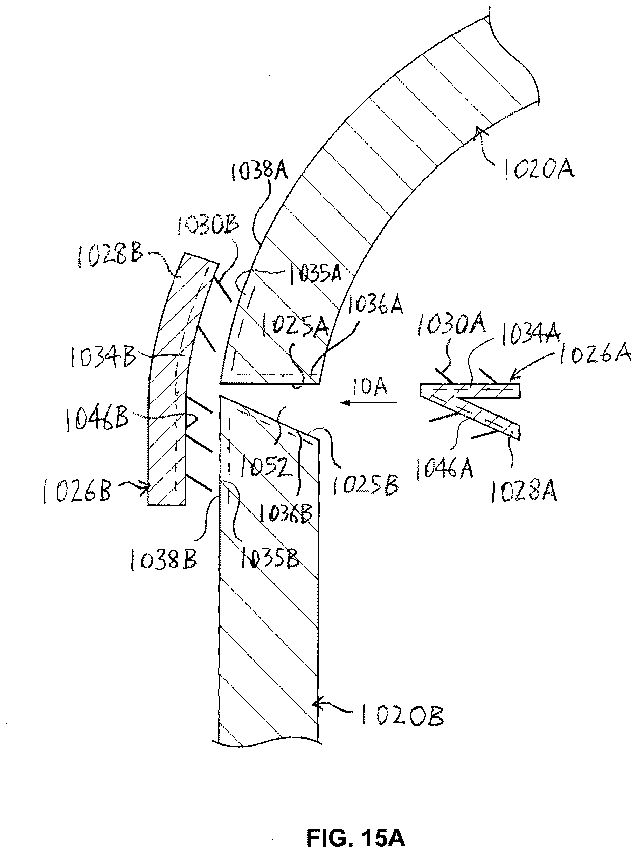

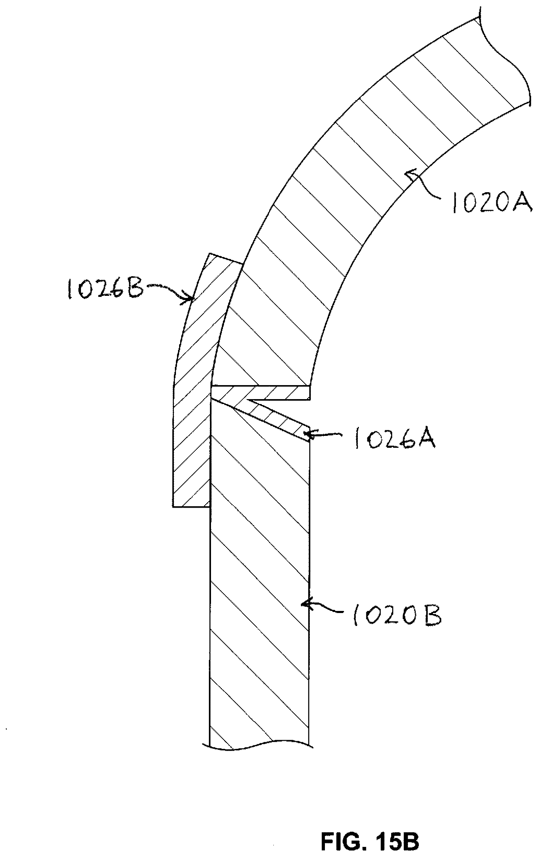

In another alternative embodiment, illustrated in Figs. 15A and 15B, interior and exterior couplers 1026A, 1026B may be used to join structural elements 1020A, 1020B. As will be described, one or both of the couplers 1026A, 1026B may be used. As can be seen in Figs. 15A and 15B, the structural elements 1020A, 1020B may be positioned to define a gap 1052 therebetween, however, alternatively, the structural elements 1020A, 1020B may be engaged with each other, to close the gap 1052.

As can be seen in Fig. 15A, in one embodiment, each of the couplers 1026A, 1026B includes a number of fins 1030A, 1030B. The length of the fins as illustrated in Fig. 15A has been exaggerated for clarity of illustration.

The structural element 1020A is formed to define a generally arcuate shape. However, in the example illustrated in Figs. 15A and 15B, the structural element 1020B is generally linear in shape. Respective end surfaces 1025A, 1025B of the structural elements 1020A, 1020B define the gap 1052 therebetween. The coupler 1026A includes a body 1028A that is shaped to fit against the respective end surfaces 1025A, 1025B of structural elements 120A, 120B. Also, the coupler 1026B includes a body 1028B that is shaped to fit against respective exterior surfaces 1038A, 1038B of the structural elements 1020A, 1020B.

The body 1028A includes one or more surfaces 1046A formed to fit against the end surfaces 1025A, 1025B. The body 1028B has a surface 1046B that is shaped to fit against the exterior surfaces 1038A, 1038B of the structural elements 1020A, 1020B relatively tightly. Those skilled in the art would appreciate that the surfaces 1046A, 1046B are formed to accommodate the fins 1030A, 1030B when the couplers 1026A, 1026B are engaged with the structural elements 1020A, 1020B.

As noted above, in some embodiments, only the interior coupler 1026A may be utilized to join the structural elements 1020A, 1020B. Alternatively, in other embodiments, only the exterior coupler 1026B may be utilized to join the structural elements 1020A, 1020B. In the following description, however, both of the couplers 1026A, 1026B are utilized to join the structural elements 1020A, 1020B.

In one embodiment, one or more heating elements (not shown) are positioned between the coupler 1026A and the end surfaces 1025A, 1025B. Similarly, one or more heating elements (not shown) are positioned between the coupler 1026B and the exterior surfaces 1038A, 1038B. The couplers, the end surfaces 1025A, 1025B, and at least parts of the exterior surfaces 1038A, 1038B are preferably covered by an inert atmosphere. It will be understood that the heating elements and a container for containing the inert atmosphere in position are omitted from Figs. 15A and 15B for clarity of illustration.

The heating elements are then energized, to heat sections of the couplers 1025A, 1026B (seen as coupler heated parts 1034A, 1034B in the inert atmosphere to their hot working temperature, such as by induction. The heated parts 1034A, 1034B include at least parts of the fins 1030A, 1030B respectively.

Other heated parts of the structural elements 1020A, 1020B (which may also be referred to as structural element heated parts) are also heated by the energized heating elements in the inert atmosphere to their hot working temperature. The heated parts of the structural elements 1020A, 1020B that are adjacent to the end surfaces 1025A, 1025B are identified by reference characters 1036A, 1036B respectively. The heated parts of the structural elements 1020A, 1020B that are adjacent to the exterior surfaces 1038A, 1038B are identified by reference characters 1035A, 1035B respectively. It will be understood that the extent of the heated parts are exaggerated in Fig. 15A, for clarity of illustration. When the heated parts are at their hot working temperature, they are subject to plastic deformation.

While the heated parts 1034A, 1036A, and 1036B are at their hot working temperature, the coupler 1026A is moved in the direction indicated by arrow "10A" (which may be seen as a translocation motion, and engaged with the end surfaces 1025A, 1025B of the structural elements 1020A, 1020B. In generally the same manner as described above, upon engagement, and while the heated parts 1034A, 1036A, and 1036B are at their hot working temperature, the coupler 1026A is subjected to an engagement motion, resulting in plastic deformation of at least some of the material in the heated parts, the heated part 1034A being at least partially metallurgically bonded with the heated parts 1036A, 1036B. As noted above, a zone of recrystallized metal having a relatively fine-grained microstructure is created. The surfaces 1046A, 1022A, and 1022B are at least partially subsumed in the recrystallized zone.

Similarly, while the heated parts 1034B, 1035A, and 1035B are at their hot working temperature, the coupler 1026B is moved toward the surfaces 1038A, 1038B of the structural elements 1020A, 1020B until the coupler 1026B is engaged with the exterior surfaces 1038A, 1038B. In generally the same manner as described above, upon engagement, and while the heated parts 1034B, 1035A, and 1035B are at their hot working temperature, the coupler 1026B is subjected to an engagement motion, resulting in plastic deformation of at least some of the material in the heated parts, and the heated part 1034B being at least partially metallurgically bonded with the heated parts 1035A, 1035B. As noted above, a zone of metal having a relatively fine-grained microstructure is created. The surfaces 1046B, 1038A, and 1038B are at least partially subsumed in the recrystallized zone.

The structural elements 1020A, 1020B may have different thicknesses, and may be made of different materials which means that the hot working temperature for their respective heated parts may be different temperatures.

As illustrated in Fig. 15B, once the couplers 1026A, 1026B are joined with the structural elements 1020A, 1020B, a product 1037 is formed.

It will also be understood that one or more of the structural elements 1020A, 1020B and the coupler bodies 1028A, 1028B, may include one or more bevelled surfaces. The bevelled surfaces are formed so as to define one or more cavities, once the couplers 1026A, 1026B are joined with the structural elements 1020A, 1020B, into which at least parts of the plastically deformable material may be extruded.

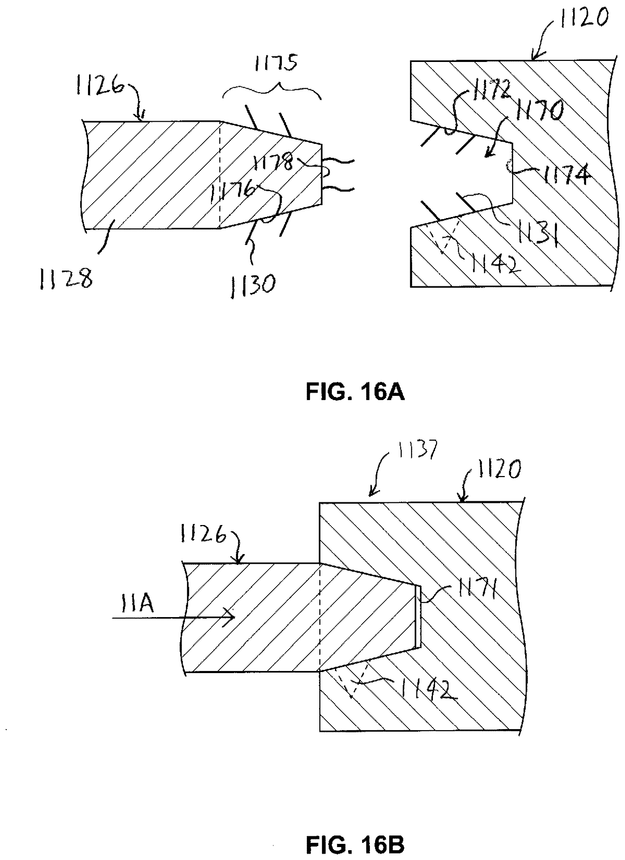

In another alternative embodiment, as schematically illustrated in Figs. 16A and 16B, a coupler 1126 may be joined with a structural element 1120. The coupler 1126 includes a body 1128 with a number or set of fins 1130 projecting from the body 1128. The length of the fins as illustrated in Fig. 16A has been exaggerated for clarity of illustration.

In the embodiment of Figs. 16 and 16B, the structural element 1120 includes a receptacle 1170 defined by one or more sidewalls 1172 and an end wall 1174. As can be seen in Figs. 16A and 16B, the body 1128 of the coupler 1126 includes a formed portion 1175 with tapered walls 1176 and an end wall 1178. The tapered walls 1176 are formed so that the formed portion 1175, and the fins 1130 positioned thereon, fit within the receptacle 1170. It is preferred that, when the formed portion 1175 is fully received in the receptacle 1170, a small gap 1171 is defined between the end wall 1178 and the receptacle's end wall 1174 (Fig. 16B).

In one embodiment, the structural element 1120 may include one or more fins 1131 that may be mounted, for example, on the sidewall 1172 and/or the end wall 1174.

One or more heating elements (not shown) are positioned between the coupler 1126 and the sidewall(s) 1172 and the end wall 1174. The formed portion 1175, the sidewalls 1172 and the end walls 1174 are covered by an inert atmosphere. It will be understood that the heating elements and a container for containing the inert atmosphere in position are omitted from Figs. 16A and 16B for clarity of illustration.

The heating elements are then energized, to heat sections (seen as coupler heated parts) of the coupler 1126 in the inert atmosphere to a hot working temperature. The heated parts include at least parts of the fins 1130. It is also preferred that a heating element (not shown in Figs. 16A, 16B) is positioned at least partially in the receptacle 1170, to heat parts of the sidewalls 1172 (seen as structural element heated parts) and to heat parts of the end wall 1174. It will be understood that the heated parts are heated to a hot working temperature, at which they are plastically deformable.

While the heated parts are at their hot working temperature, the coupler 1126 is pushed into the receptacle 1170, i.e., in the direction indicated by arrow "11A" in Fig. 16B such as via a translocation motion. In generally the same manner as described above, upon engagement, and while the heated parts are at the hot working temperature, the coupler 1126 is subjected to an engagement motion, resulting in plastic deformation of at least some of the material in the heated parts. As described above, the engagement motion may be any motion of one or both of the coupler and the structural element relative to the other. It is preferred that, while the coupler 1126 is subjected to the engagement motion, the coupler 1126 is urged against the structural element 1120 in the direction indicated by arrow "11A".

While at the hot working temperature, the heated parts of the formed portion 1175 of the body 1128 and the heated parts of the sidewall 1172 are engaged with each other, causing at least partial plastic deformation of the heated parts thereof. As noted above, a zone of recrystallized metal having a relatively fine-grained microstructure is created due to the plastic deformation. The surfaces of the sidewalls 1172, 1176 are at least partially subsumed in the recrystallized zone.

As illustrated in Fig. 16B, once the coupler 1126 is joined with the structural element 1120, a product 1137 is formed. It will be understood that the fins 1130, 1131 are omitted from Fig. 16B for clarity of illustration.

It will also be understood that one or more of the structural element 1120 and the coupler body 1128 may include one or more cavities 1142 that are positioned and sized so that, as the coupler 1126 is joined with the structural element 1120, at least parts of the plastically deformable material may be extruded into the cavities 1142.

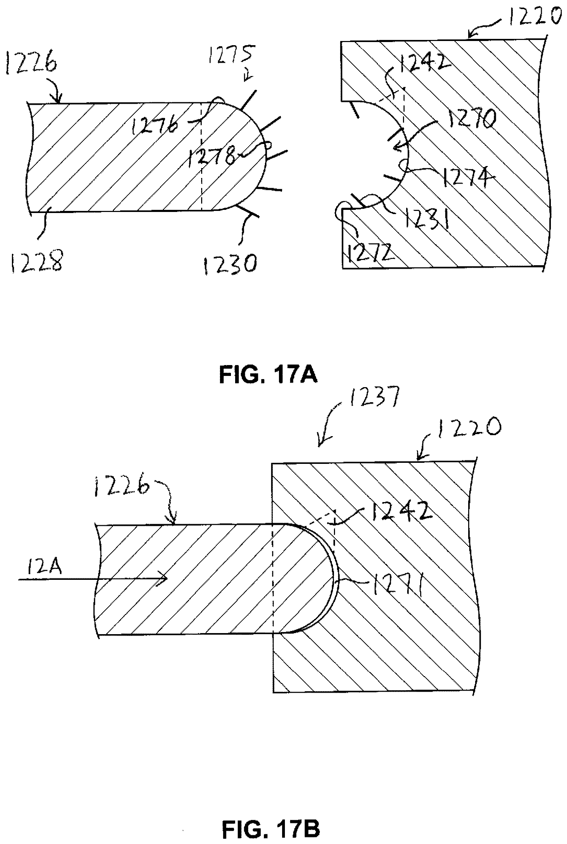

In another alternative embodiment, illustrated in Figs. 17A and 17B, a coupler 1226 may be joined with a structural element 1220. The coupler 1226 includes a body 1228.

As can be seen in Fig. 17A, in one embodiment, the coupler 1226 includes a number of fins 1230 projecting from the body 1228. The length of the fins as illustrated in Fig. 17A has been exaggerated for clarity of illustration.

The structural element 1220 includes a receptacle 1270 defined by one or more walls 1272 and a rounded end wall 1274. As can be seen in Figs. 17A and 17B, the body 1228 of the coupler 1226 includes a formed portion 1275 with one or more walls 1276 and a rounded end wall 1278. Preferably, the wall 1276 and the end wall 1274 are formed so that the formed portion 1275, and the fins 1230 positioned thereon, fit within the receptacle 1270. It is preferred that, when the formed portion 1275 is fully received in the receptacle 1270, a small gap 1271 is defined between the coupler's end wall 1278 and the receptacle's end wall 1274 (Fig. 17B).

In one embodiment, the structural element 1220 may include one or more fins 1231 that may be mounted or integrated, for example, on the wall 1272 and/or the receptacle's end wall 1274.

One or more heating elements (not shown) are positioned between the coupler 1226 and the sidewall(s) 1272 and the receptacle's end wall 1274. The formed portion 1275, the walls 1272 and the end walls 1274 preferably are covered by an inert atmosphere. It will be understood that the heating elements and a container for containing the inert atmosphere in position are omitted from Figs. 17A and 17B for clarity of illustration.

The heating elements are then energized, to heat section (seen as coupler heated parts) of the coupler 1226 in the inert atmosphere to a hot working temperature. The heated parts include at least parts of the fins 1230 respectively. It is also preferred that a heating element (not shown in Figs. 17A, 17B) is positioned at least partially in the receptacle 1270, to heat parts of the walls 1272 and to heat parts of the end wall 1274. It will be understood that the heated parts are heated to a hot working temperature, at which they are plastically deformable.

While the heated parts are at their hot working temperature, the coupler 1226 is pushed into the receptacle 1270, i.e., in the direction indicated by arrow "12A" in Fig. 17B. In generally the same manner as described above, upon engagement, and while the heated parts are at their hot working temperature, the coupler 1226 is subjected to an engagement motion, resulting in plastic deformation of at least some of the material in the heated parts. As described above, the engagement motion may be any motion of one or both of the coupler and the structural element relative to the other. It is preferred that, while the coupler 1226 is subjected to the engagement motion, the coupler 1226 is urged against the structural element 1220 in the direction indicated by arrow "12A".

While at the hot working temperature, the heated parts of the formed portion 1275 of the body 1228 and the heated parts of the wall 1272 are engaged with each other, causing at least partial plastic deformation of the heated parts thereof. As noted above, a zone of recrystallized metal having a relatively fine-grained microstructure is created due to the plastic deformation. The surfaces of the walls 1272, 1276 are at least partially subsumed in the recrystallized zone.

As illustrated in Fig. 17B, once the coupler 1226 is joined with the structural element 1220, a product 1237 is formed. It will be understood that the fins 1230, 1231 are omitted from Fig. 17B for clarity of illustration.

It will also be understood that one or more of the structural element 1220 and the coupler body 1228 may include one or more cavities 1242. The cavities 1242 are positioned and sized so that, as the coupler 1226 is joined with the structural element 1220, at least parts of the plastically deformable material may be extruded into the cavities 1242 (Figs. 17A, 17B).

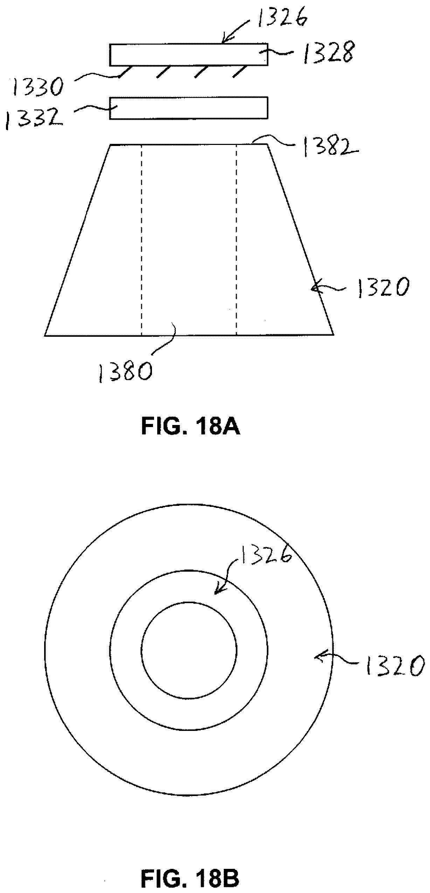

In another alternative embodiment, as schematically illustrated in Figs. 18A-18C, a coupler 1326 may be joined with a structural element 1320. The coupler 1326 preferably includes a body 1328.

As can be seen in Fig. 18A, in one embodiment, the coupler 1326 includes a number or set of fins 1330 projecting from the body 1328. The length of the fins as illustrated in Fig. 18A has been exaggerated for clarity of illustration.

The structural element 1320 includes a number of sheets 1380 of metal or any other suitable material that have been secured together to form a conical frustum. The sheets 1380 are to be joined, in part, with the coupler 1326 when the coupler 1326 is secured to the sheets at their respective upper ends 1382.

First, one or more heating elements 1332 are positioned between the coupler 1326 and the upper ends 1382 of the sheets 1380. The coupler 1326 and the upper ends 1382 are preferably covered by an inert atmosphere. It will be understood that a container for containing the inert atmosphere in position is omitted from Figs. 18A-18C for clarity of illustration.

The heating elements are then energized, to heat sections (seen as coupler heated parts) of the coupler 1326 in the inert atmosphere to a hot working temperature. The heated parts include at least parts of the fins 1330. It is also preferred that the heating element is positioned to heat sections or parts of the sheets 1380 (which may be seen as structural element heated parts). It will be understood that the heated parts are heated to a hot working temperature, at which they are plastically deformable.

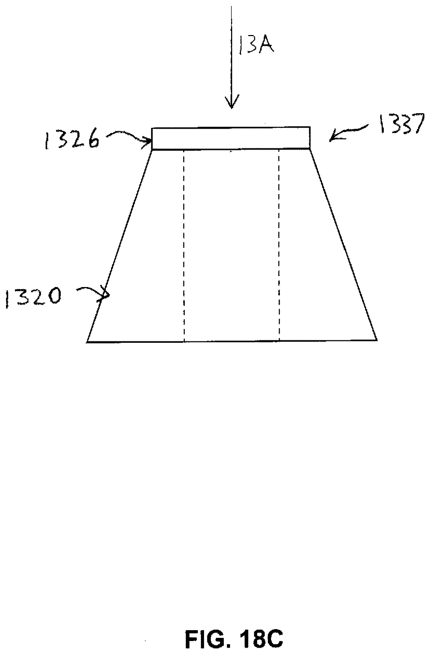

While the heated parts are at their hot working temperature, the heating element 1332 is removed, and the coupler 1326 is pushed onto the upper ends 1382, i.e., in the direction indicated by arrow "13A" in Fig. 18C. In generally the same manner as described above, upon engagement, and while the heated parts are at the hot working temperature, the coupler 1326 preferably is subjected to an engagement motion, resulting in plastic deformation of at least some of the material in the heated parts. As described above, the engagement motion may be any motion of one or both of the coupler and the structural element relative to the other. It is preferred that, while the coupler 1326 is subjected to the engagement motion, the coupler 1326 is urged against the structural element 1320 in the direction indicated by arrow "13A".

While at the hot working temperature, the heated parts of the coupler 1326 and the heated parts of the upper ends 1382 are engaged with each other, causing at least partial plastic deformation of the heated parts thereof. As noted above, a zone of recrystallized metal having a relatively fine-grained microstructure is created due to the plastic deformation. The engaged surfaces of the coupler body 1328 and the sheets 1380 are at least partially subsumed in the recrystallized zone.

As illustrated in Fig. 18C, once the coupler 1326 is joined with the structural element 1320, a product 1337 is formed. It will be understood that the fins are omitted from Fig. 18C for clarity of illustration.

It will also be understood that one or more of the structural element 1320 and the coupler body 1328 may include one or more bevelled surfaces. The bevelled surfaces are formed so as to define one or more cavities, once the coupler 1326 is joined with the structural element 1320, at least parts of the plastically deformable material may be extruded (Figs. 17A, 17B).

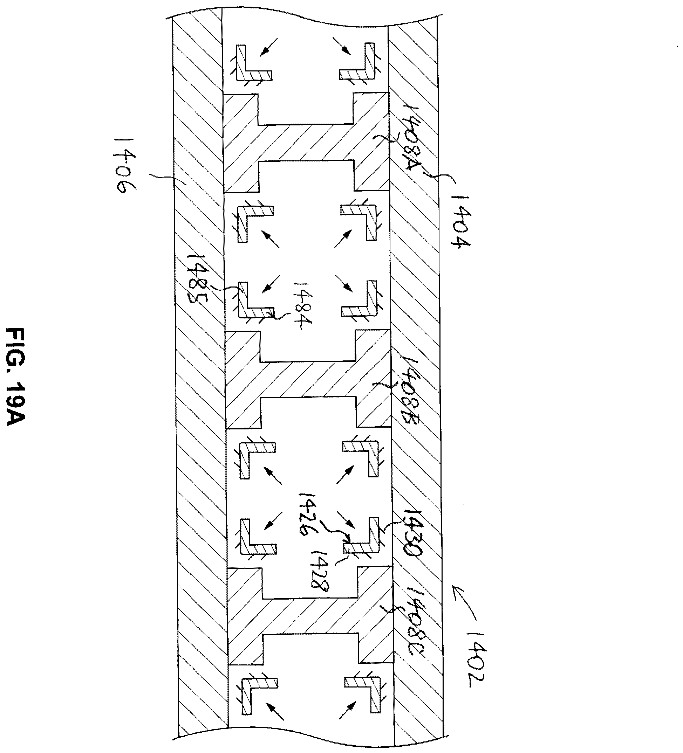

As can be seen in Fig. 19A, a structure 1402 includes upper and lower plates 1404, 1406 and a number of I-beams or pillars positioned therebetween. For convenience, the I-beams or pillars illustrated in Fig. 19A are identified by reference characters 1408A, 1408B, and 1408C. It will be understood that the pillars may have any suitable shape, and may not necessarily be I-beams.

A number of couplers 1426 are illustrated in Fig. 19A, each being shown positioned proximal to a pillar. Each of the couplers 1426 preferably includes a body 1428 and fins 1430 extending from the body 1428. For clarity of illustration only one of the couplers is identified by reference characters in Fig. 19A.

First, the couplers are positioned for (i) heating thereof, and (ii) engagement thereof with the respective pillars, and the portions of the plates adjacent thereto (Fig. 19A).

It will be understood that heating elements (not shown) are positioned for heating heated parts (not shown in Fig. 19A) of the couplers and the pillars, and heated parts of the upper and lower plates 1404, 1406 to respective hot working temperatures, at which the heated parts are plastically deformable. It will also be understood that the heating elements are omitted from Fig. 19A for clarity of illustration.

At least the heated parts are covered by an inert (non-oxidizing) atmosphere, which is held in place by a container. The inert atmosphere and the container therefor are also omitted from Fig. 19A for clarity of illustration.

Next, the heating elements may heat the heated parts using any suitable technique, e.g., induction.

Once the heated parts of the coupler and the pillar, and of the plate adjacent to the pillar, are at their hot working temperature, the coupler is subjected to a translocation motion, and moved to cause the heated part of the coupler to engage the heated parts of the pillar and the heated parts of the plate adjacent to the pillar. In one embodiment, once engaged, the coupler preferably is moved in an engagement motion relative to the pillar and to the plate, to subject the plastically deformable heated parts to shear. (Alternatively, the coupler may subjected to the engagement motion before engagement.) As described above, due to the plastically deformable material (metal) shearing, at least parts of the heated parts are recrystallized, to provide a zone of recrystallized metal with a microstructure having a generally uniform grain size. The zone of recrystallized metal extends throughout the regions that had been the heated parts. The surfaces that were initially engaged are at least partially subsumed in the zone of recrystallized material.

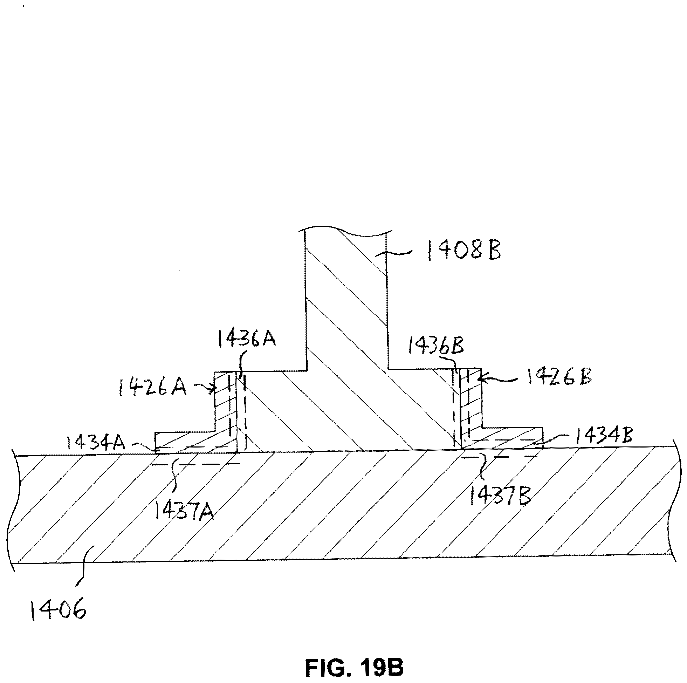

An example can be seen in Fig. 19B, in which couplers are shown upon engagement thereof with the pillar 1408B and the lower plate 1406. For convenience, the couplers shown in Fig. 19B are identified by reference characters 1426A and 1426B. The fins thereof are omitted from Fig. 19B for clarity of illustration.

In Fig. 19B, the heated parts of the couplers 1426A, 1426B and the pillar 1408B are identified by reference characters 1434A, 1434B, and 1436A, 1436B respectively. The heated parts of the lower plate are identified by reference characters 1437A, 1437B respectively (Fig. 19B).

As can be seen in Fig. 19A, the body of the coupler is formed to fit against the pillar 1408B and the lower plate 1406. The body 1428 includes a first portion 1484 and a second portion 1485 that are formed integrally. The first and second portions 1484, 1485 are respectively formed to engage the pillar and the plate substantially simultaneously, subject to the fins that are squeezed between the body and the pillar, and also between the body and the plate.

Once engaged, and while the heated parts are at their hot working temperature, the couplers 1426A, 1426B preferably are moved relative to the pillar and the lower plate. The plastically deformable material in the heated parts is then subjected to shear, resulting in the couplers being joined with the pillar and the plates, as described above.

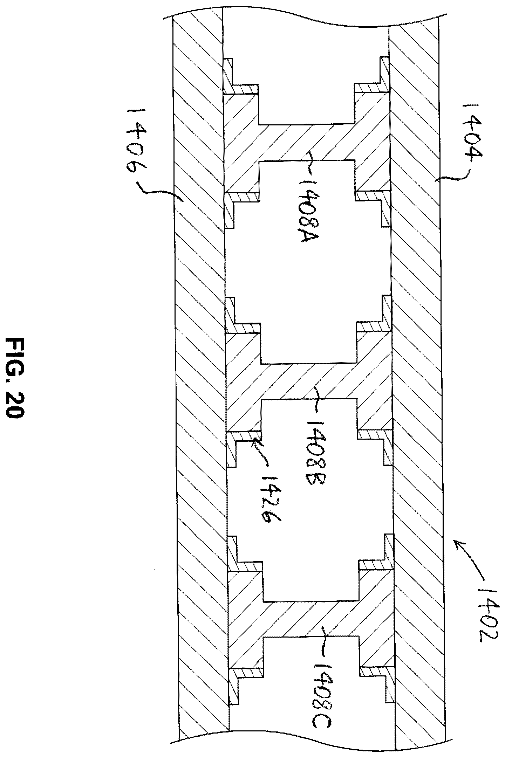

As can be seen in Fig. 20, the result of the foregoing process is that the pillars are joined with the upper and lower plates 1404, 1406by the couplers. For convenience, the pillars are identified in Fig. 20 by reference characters 1408A, 1408B, and 1408C.

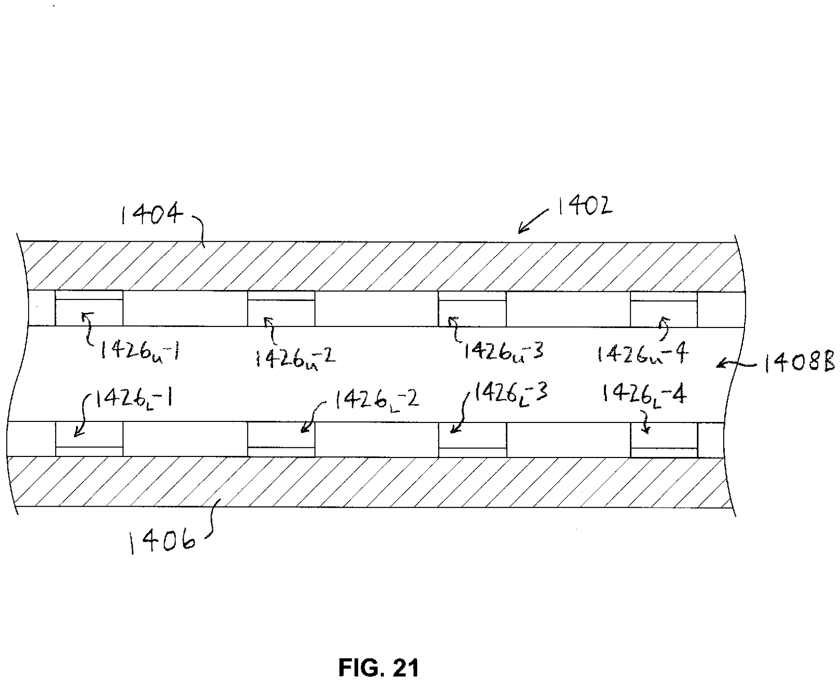

In Fig. 21, a partial side view of the pillar 1408B and longitudinal sections of the upper and lower plates 1404, 1406 are provided. As can be seen in Fig. 21, it is preferred that the couplers join the pillar 1408B to the upper and lower plates 1404, 1406 at intervals, so that the couplers are spaced apart from each other. For convenience, the couplers that join the pillar 1408B to the upper plate 1404 are identified in Fig. 21 by reference characters 1426ᵤ-1, 1426ᵤ-2, 1426ᵤ-3, and 1426ᵤ-4. Also, the couplers that join the pillar 1408B to the lower plate 1406 are identified in Fig. 21 by reference characters 1426_{L}-1, 1426_{L}-2, 1426_{L}-3, and 1426_{L}-4.

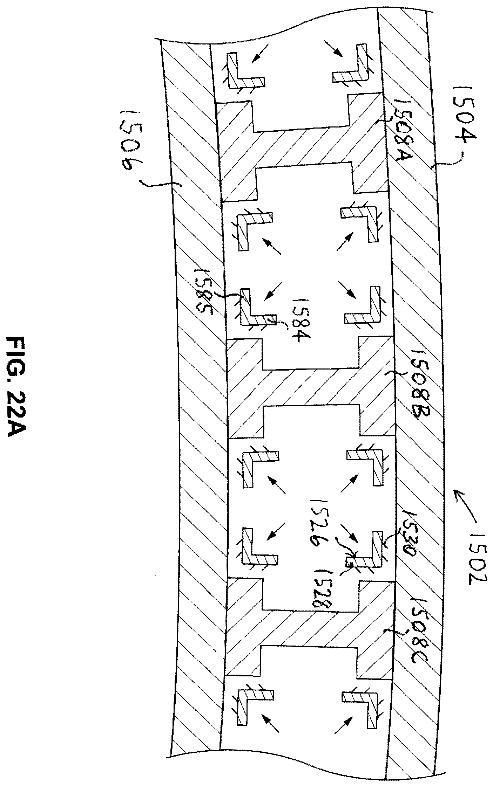

As can be seen in Fig. 22A, a structure 1502 includes upper and lower plates 1504, 1506 and a number of I-beams or pillars positioned therebetween. For convenience, the I-beams or pillars illustrated in Fig. 22A are identified by reference characters 1508A, 1508B, and 1508C. It will be understood that the pillars may have any suitable shape and may not necessarily be I-beams.

As can also be seen in Fig 22A, the plates 1504, 1506 both have a generally convex profile. It will be understood that the process of joining the pillars to the upper and lower plates is generally similar to the process for joining pillars to non-curved upper and lower plates described above in connection with Figs. 19A-21.

A number of couplers 1526 are illustrated in Fig. 22A, each being shown positioned proximal to a pillar. Each of the couplers 1526 includes a body 1528 and fins 1530 extending from the body 1528. For clarity of illustration only one of the couplers is identified by reference characters in Fig. 22A.

First, the couplers are positioned for (i) heating thereof, and (ii) engagement thereof with the respective pillars, and the portions of the plates adjacent thereto (Fig. 22A).

It will be understood that heating elements (not shown) are positioned for heating heated parts (not shown in Fig. 22A) of the couplers and the pillars and heated parts of the upper and lower plates 1504, 1506 to a hot working temperature, at which the heated parts are plastically deformable. It will also be understood that the heating elements are omitted from Fig. 22A for clarity of illustration.

The heated parts are covered by an inert (non-oxidizing) atmosphere, which is held in place by a container. The inert atmosphere and the container therefor are also omitted from Fig. 22A for clarity of illustration.

Next, the heating elements heat the heated parts using any suitable technique, e.g., induction.

Once the heated parts of the coupler, and the pillar and of the plate adjacent to the pillar, are at the hot working temperature, the coupler preferably is subjected to a translocation motion, and moved to cause the heated part of the coupler to engage the heated parts of the pillar and the heated parts of the plate adjacent to the pillar. In one embodiment, once engaged, the coupler preferably is moved in an engagement motion relative to the pillar and to the plate, to subject the plastically deformable heated parts to shear. (Alternatively, the coupler may subjected to the engagement motion before engagement.) As described above, due to the plastically deformable material (metal) shearing, at least parts of the heated parts are recrystallized, to provide a zone of recrystallized metal with a microstructure having a generally uniform grain size. The zone of recrystallized metal extends throughout the regions that had been the heated parts. The surfaces that were initially engaged are at least partially subsumed in the zone of recrystallized material.

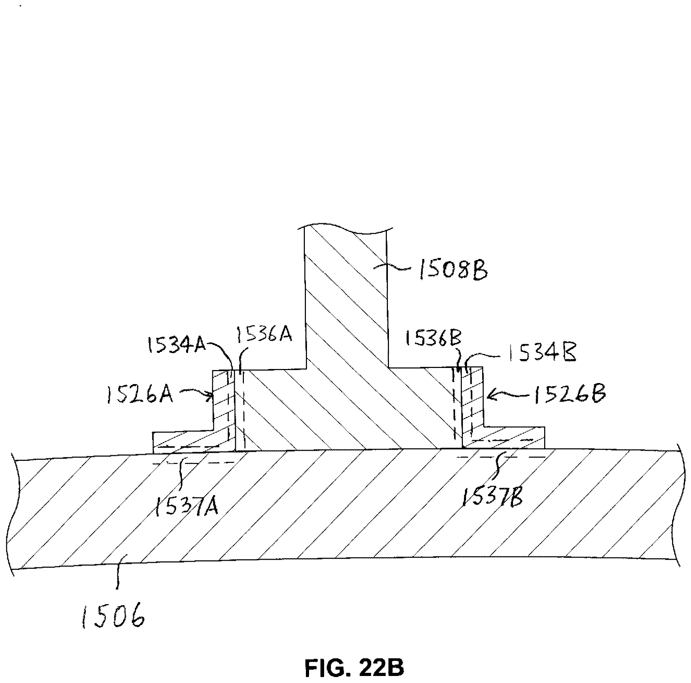

An example can be seen in Fig. 22B, in which the couplers are shown upon engagement thereof with the pillar 1508B and the lower plate 1506. For convenience, the couplers shown in Fig. 22B are identified by reference characters 1526A and 1526B. The fins thereof are omitted from Fig. 22B for clarity of illustration.

**In** Fig. 22B, the heated parts of the couplers 1526A, 1526B and the pillar 1508B are identified by reference characters 1534A, 1534B, and 1536A, 1536B respectively. The heated parts of the lower plate are identified by reference characters 1537A, 1537B respectively (Fig. 22B).

As can be seen in Fig. 22A, the body of the coupler preferably is formed to fit against the pillar 1508B and the lower plate 1506. The body 1528 includes a first portion 1584 and a second portion 1585 that are formed integrally. The first and second portions 1584, 1585 preferably are respectively formed to engage the pillar and the plate substantially simultaneously, subject to the fins that are squeezed between the body and the pillar, and the body and the plate.

Once engaged, and while the heated parts are at their hot working temperature, the couplers 1526A, 1526B are moved relative to the pillar and the lower plate. The plastically deformable material in the heated parts is then subjected to shear, resulting in the couplers being joined with the pillar and the plates, as described above.

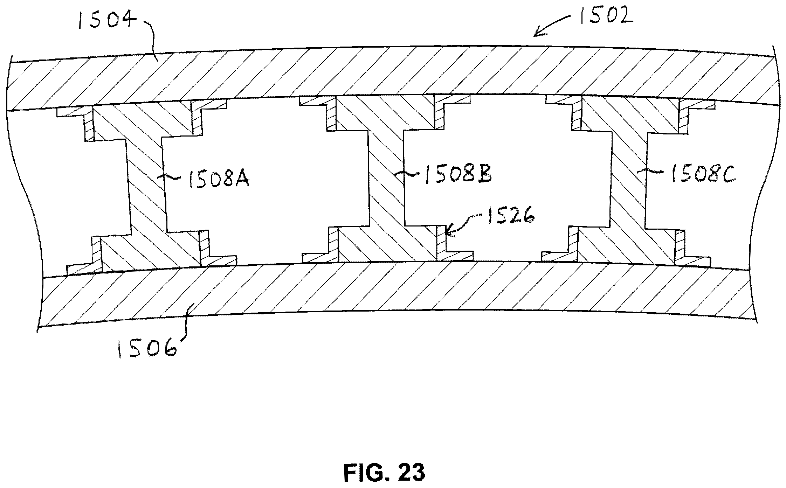

As can be seen in Fig. 23, the result of the foregoing process is that the pillars are joined with the upper and lower plates 1504, 1506by the couplers. For convenience, the pillars are identified in Fig. 23 by reference characters 1508A, 1508B, and 1508C.

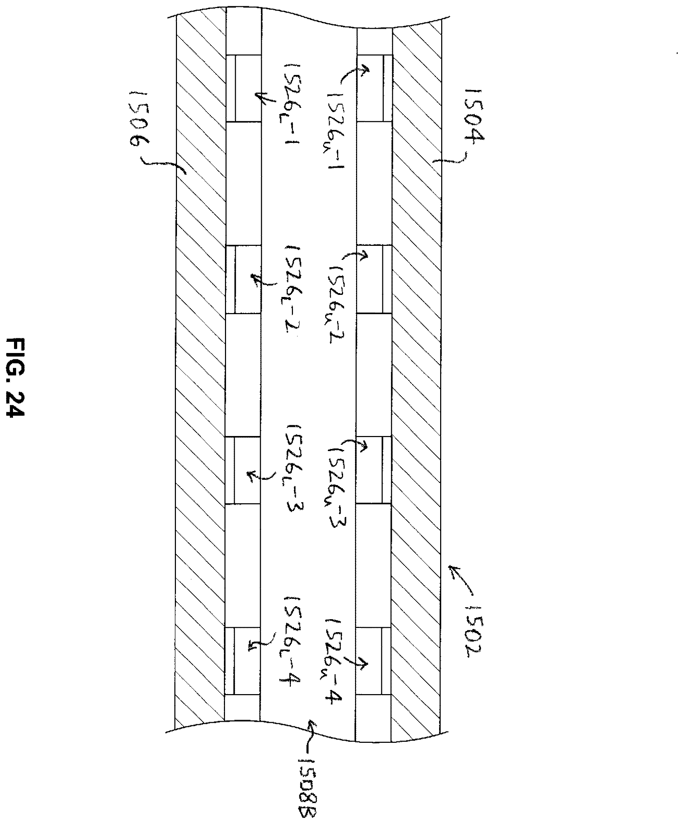

In Fig. 24, a partial side view of the pillar 1508B and longitudinal sections of the upper and lower plates 1504, 1506 are provided. As can be seen in Fig. 24, it is preferred that the couplers join the pillar 1508B to the upper and lower plates 1504, 1506 at intervals, so that the couplers are spaced apart from each other. For convenience, the couplers that join the pillar 1508B to the upper plate 1504 are identified in Fig. 24 by reference characters 1526ᵤ-1, 1526ᵤ-2, 1526ᵤ-3, and 1526ᵤ-4. Also, the couplers that join the pillar 1508B to the lower plate 1506 are identified in Fig. 24 by reference characters 1526_{L}-1, 1526_{L}-2, 1526_{L}-3, and 1526_{L}-4.

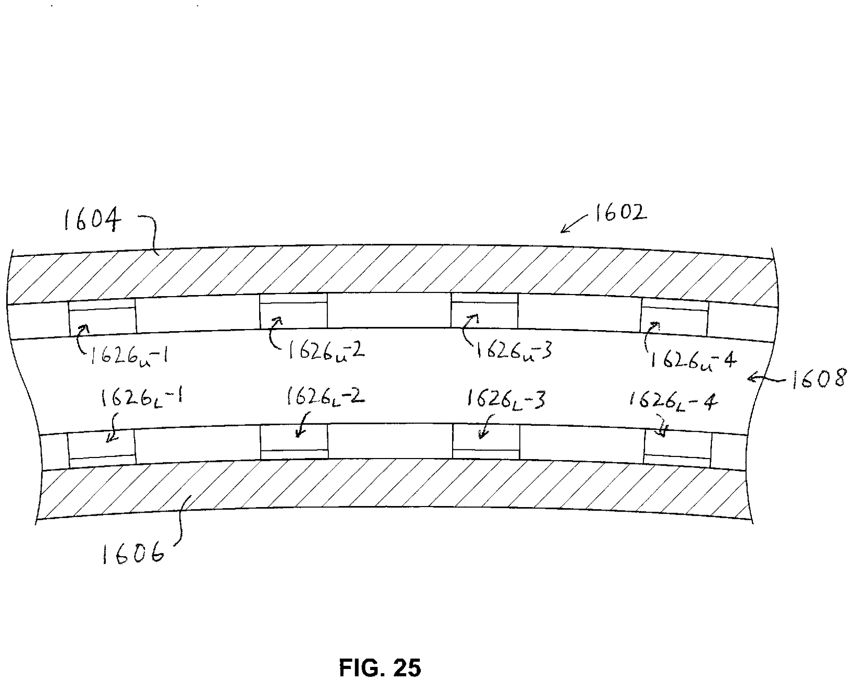

As can be seen in Fig. 25, a structure 1602 includes upper and lower plates 1604, 1606 and a pillar 1608 positioned therebetween. Fig. 25 is a longitudinal section through the structure 1602 that includes a side view of the pillar 1608. Preferably, couplers join the pillar 1608 to the upper and lower plates 1604, 1606.

It can be seen in Fig. 25 that the upper and lower plates 1604, 1606 have parallel, generally convex profiles in a longitudinal direction, i.e., parallel to the pillars. It will be understood that the structure 1602 includes a number of pillars positioned between the upper and lower plates 1604, 1606, and that the pillar 1608 is representative.

Couplers join the pillar 1608 to the upper and lower plates 1604, 1606 at intervals, so that the couplers are spaced apart from each other. For convenience, the couplers that join the pillar 1608 to the upper plate 1604 are identified in Fig. 25 by reference characters 1626ᵤ-1, 1626ᵤ-2, 1626ᵤ-3, and 1626ᵤ-4. Also, the couplers that join the pillar 1608 to the lower plate 1606 are identified in Fig. 25 by reference characters 1626_{L}-1, 1626_{L}-2, 1626_{L}-3, and 1626_{L}-4.

It will be understood that the pillars may have any suitable shape, and may not necessarily be I-beams.

It will also be understood that the process of joining the pillars to the upper and lower plates is generally similar to the process for joining pillars to other upper and lower plates described above.

The couplers are shown in Fig. 25 after they have been joined to the pillar 1608 and to the upper and lower plates.

As described above, due to the plastically deformable material (metal) shearing, at least parts of the heated parts are recrystallized, to provide a zone of recrystallized metal with a microstructure having a generally uniform grain size. The zone of recrystallized metal extends throughout the regions that had been the heated parts. The surfaces that were initially engaged are at least partially subsumed in the zone of recrystallized material.

From the foregoing, it can be seen that the embodiments of the method of the disclosure have the following advantages.
1. The method may be utilized without requiring qualified welders.
2. The embodiments of the method may be automated to a large extent, leading to greater confidence in the product of the process.
3. The integrity of the finished product may be documented electronically.

It will be appreciated by those skilled in the art that the disclosure can take many forms, and that such forms are within the scope of the disclosure as claimed. The scope of the claims should not be limited by the preferred embodiments set forth in the examples, but should be given the broadest interpretation consistent with the description as a whole.

## Claims

1. A method comprising:
providing a pair of structural elements, each of the structural elements including end portions, the end portions of each of the pair of structural elements positioned opposed to each other;
providing at least one coupler, each of the at least one coupler including a body portion wherein the body portion is positioned proximate the end portions of each of the pair of structural elements;
providing an inert atmosphere covering the coupler and the end portions of each of the pair of structural elements;
heating a coupler heated section of the at least one coupler to a coupler hot working temperature and heating structural element heated sections of the end portions to a structural element hot working temperature;
subjecting one or both of the at least one coupler and at least a selected one of the pair structural elements to a translocation motion, to engage the at least one coupler with an interior or exterior surface of the end portions of each of the pair of structural elements;
subjecting one or more of the at least one coupler and at least one of the pair of structural elements to an engagement motion, in which one or more of the coupler and said at least one of the pair of structural elements move relative to the other; and
urging the at least one coupler against the interior or exterior surface of each of the pair of structural elements at the end portions thereof, to join the at least one coupler to the end portions of the respective structural elements.

2. The method of Claim 1 wherein providing a coupler further comprises:
providing a plurality of fins positioned on the body portion of each of the at least one coupler for at least partial engagement with the interior surface of the end portions of each of the pair of structural elements.

3. The method of any preceding Claim wherein providing a coupler further comprises:
providing a plurality of fins positioned on the body portion of each of the at least one coupler for at least partial engagement with the exterior surface of the end portions of each of the pair of structural elements.

4. The method of any preceding Claim wherein heating a coupler heated section of the coupler to a coupler hot working temperature and heating structural element heated sections of the end portions to a structural element hot working temperature comprises:
providing at least one heating element proximate the at least one coupler and
the end portions of the pair of structural elements;
energizing the at least one heating element to heat the coupler heated section and the structural element heated sections; and
removing the at least one heating element.

5. The method of any preceding Claim wherein the end portions of each of the pair of structural elements comprises a bevelled surface thereby forming a cavity when the end portions are engaged whereby the coupler heated section extrudes into the cavity during application of the translocation and/or the engagement motion.

6. The method of any preceding Claim wherein providing at least one coupler comprises providing at least two couplers.

7. The method of Claim 6 further comprising:
inserting an intermediate element between the at least two couplers to seal a gap between the at least two couplers.

8. The method of any preceding Claim wherein urging the at least one coupler against the interior or exterior surface of each of the pair of structural elements at the end portions thereof, to join the at least one coupler to the end portions of the respective structural elements comprises:
urging the at least one coupler against both the interior and the exterior surfaces of each of the pair of structural elements at the end portions thereof, to join the at least one coupler to the end portions of the respective structural elements.
